# EUROPÄISCHE PATENTSCHRIFT

(11) **EP 3 538 813 B1**
(45) Veröffentlichungstag und Bekanntmachung des Hinweises auf die Patenterteilung: **19.07.2023**
(21) Anmeldenummer: 17800385.1
(22) Anmeldetag: 20.10.2017
(51) Int. Cl.: F21V 8/00, G02F 1/01, G02F 1/035

(54) **WELLENLEITER, VERFAHREN ZUR AUSKOPPLUNG VON LICHT AUS EINEM WELLENLEITER UND DISPLAY**
WAVEGUIDE, METHOD FOR THE OUTPUT COUPLING OF FROM A WAVEGUIDE, AND DISPLAY
GUIDE D'ONDES, PROCÉDÉ DE COUPLAGE DE SORTIE DE LUMIÈRE HORS D'UN GUIDE D'ONDES ET AFFICHAGE

(30) Priorität: 10.11.2016 DE 102016013330
(43) Veröffentlichungstag der Anmeldung: 18.09.2019
(73) Patentinhaber: Bergische Universität Wuppertal, 42119 Wuppertal (DE)
(72) Erfinder: GÖRRN, Patrick, 42119 Wuppertal (DE)
(74) Vertreter: Cohausz Hannig Borkowski Wißgott
(86) Internationale Anmeldenummer: PCT/EP2017/001236
(87) Internationale Veröffentlichungsnummer: WO 2018/086727

(56) Entgegenhaltungen:
- EP-A1- 1 119 795
- WO-A1-2008/125926
- WO-A1-2016/000728
- FR-A1- 2 577 328
- JP-A- 2013 197 071
- US-A- 5 596 671
- US-A1- 2010 259 804
- US-A1- 2013 105 770
- GÃRRN P ET AL: "Loss reduction in fully contacted organic laser waveguides using TE2 modes", APPLIED PHYSICS LETTERS, A I P PUBLISHING LLC, US, Bd. 91, Nr. 4, 27. Juli 2007 (2007-07-27), Seiten 41113-41113, XP012100193, ISSN: 0003-6951, DOI: 10.1063/1.2757598

## Beschreibung

Die Erfindung betrifft einen Wellenleiter gemäß Anspruch 1. Eine im Wellenleiter führbare Mode ist insbesondere eine TEₙ oder TMₙ-Mode oder HEₙₘ bzw. EHₙₘ, jeweils mit mindestens einem Knoten in Wachstumsrichtung (also n>=1 und m beliebig).

Auf dem genannten Substrat sind bevorzugt die Schichtaufbauten in einer Richtung senkrecht zur Substratoberfläche übereinanderlliegend angeordnet. Dies entspricht einer Stapelung in Wachstumsrichtung der Schichten. Die Struktur liegt weiterhin in einer Ebene parallel zur Substratoberfläche. In dieser Ebene kann die Struktur flächig, aber auch nur linienförmig ausgebildet sein.

Die Erfindung betrifft auch ein Verfahren zur Auskopplung von Licht aus einem Wellenleiter gemäß Anspruch 14.

Weiterhin betrifft die Erfindung ein Display mit einer Zeilen- und Spaltenanordnung von ansteuerbaren Subpixeln, umfassend wenigstens einen erfindungsgemäßen Wellenleiter.

Ein Wellenleiter der vorgenannten Art ist aus der von der Anmelderin selbst stammenden Veröffentlichung WO2016000728A1 bekannt. Die dort beschriebene Anordnung wird verwendet, um über die Struktur Licht, das von außen auf den Wellenleiter trifft durch Beeinflussung der Lichtausbreitung, insbesondere durch Streuung in den Wellenleiter einzukoppeln, jedoch gleichzeitig sicher zu stellen, dass dieselbe Struktur nicht in umgekehrter Weise eine für das Licht auskoppelnde Wirkung hat.

Eine solche Auskopplung wird dadurch vermieden, dass in dem Wellenleiter eine Mode angeregt wird, welche wenigstens einen, bevorzugt genau einen Knoten in der transversalen Intensitätsverteilung aufweist und der Wellenleiter so ausgebildet ist, dass die genannte Struktur hinsichtlich ihrer in Stapelungsrichtung betrachteten Position in der Knotenposition angeordnet ist, somit also bei der Ausbreitung des Lichtes die Struktur allenfalls vernachlässigbar durch die Lichtintensität beaufschlagt ist und somit praktisch keine Streuung von in dem Wellenleiter propagierendem Licht an der Struktur erfolgt.

Ein solcher Wellenleiter hat somit den Vorteil, Licht aus der Umgebung in sich zu konzentrieren, jedoch den Nachteil, dass mit diesem Wellenleiter keine direkte Möglichkeit der Auskopplung von Licht, insbesondere der bedarfsgerechten, wahlweisen Auskopplung zu erschließen.

Es ist somit eine Aufgabe der Erfindung einen solchen bekannten Wellenleiter so weiterzubilden, dass mit ihm eine verlustarme Propagation von Licht ermöglicht wird, jedoch auch eine bedarfsgerechte Auskopplung erschlossen wird, insbesondere an mehreren verschiedenen Positionen, bevorzugt, die jeweils durch eine Ansteuerung wählbar sind. Weiterhin ist es eine Aufgabe, ein Display mit wenigstens einem solchen Wellenleiter bereit zu stellen und ein Verfahren zur Auskopplung von Licht aus einem solchen Wellenleiter zu erschließen.

Die Aufgabe wird mit dem Wellenleiter gemäß Anspruch 1 und dem Verfahren gemäß Anspruch 14 gelöst.

Technisch bewirkt dies, dass die Knotenposition der geführten Wellenleitermode nicht mehr übereinstimmend ist mit der Position der Struktur, so dass diese Struktur nicht mehr unmittelbar vom Intensitätsminimum umgeben ist, das in der Knotenposition vorliegt, sondern durch die Verschiebung nunmehr eine signifikante Intensität des Transversalprofils der Mode die Struktur überlagert und somit diese Struktur die Lichtausbreitung insofern beeinflusst, dass Licht aus dem Wellenleiter ausgekoppelt wird.

Die in dem eingangs genannten Stand der Technik gewünschte Funktionalität zwischen Struktur und Wellenleitermode, nämlich nur Licht in den Wellenleiter einzukoppeln, aber die im Wellenleiter propagierende Mode nicht zu beeinflussen, wird somit gemäß der Erfindung durch die genannten Mittel bewusst zeitweise aufgehoben.

Die genannte Struktur kann zum Zweck der Auskopplung von Licht aus dem Wellenleiter in einer möglichen bevorzugten Ausführung als streuende Struktur und/oder beugende und/oder reflektierende Struktur ausgebildet sein. Durch eine solche Struktur kann somit die Ausbreitungsrichtung gegenüber der Wellenleitermode geändert werden, was zur Auskopplung führen kann.

Im Gegensatz zu streuenden, beugenden oder reflektierenden, im Folgenden passiv genannten Strukturen, die hauptsächlich die Ausbreitungsrichtung der geführten Mode verändern, könnten auch lumineszierende Strukturen genutzt werden. Im ersten Schritt würde die Lumineszenz anregende geführte Mode in der Struktur absorbiert. Im Sinne der Erfindung wäre die Absorption vom Füllfaktor der Struktur abhängig, wäre also durch Verschiebung der Mode gegenüber der lumineszierenden Schicht im Knoten einstellbar. Nach der Absorption würde Licht erhöhter Wellenlänge in einem weiten Winkelbereich emittiert, so dass ein signifikanter Teil dieses Lichts den Wellenleiter verlassen könnte. Ein solcher Effekt kann hervorgerufen werden mit wenigstens einem in der Struktur vorliegenden Stoff, der eine Phosphoreszenz, Fluoreszenz, Lumineszenz oder einen Stokes-Shift zwischen Absorption und Emission aufweist.

Bei den vorgenannten Ausführungen, besonders bei einer streuenden Struktur besteht z.B. die Möglichkeit, dass die lichtauskoppelnde Struktur ausgebildet ist als eine strukturierte Schicht aus abgeschiedenem Metall. Eine solche Strukturierung kann auf einer lateralen Größenskala weniger 10nm bis einige Mikrometer vorliegen.

Vorteil dieses Ansatzes ist die Tatsache, dass schon sehr dünne metallische Strukturen, die also sehr gut in die Knotenposition "passen" sehr stark mit Licht wechselwirken können. Diese starke Wechselwirkung wird in einer Reihe plasmonischer Anwendungen ausgenutzt. Nachteil dieses Ansatzes ist die Notwendigkeit, gezielt zu strukturieren.

In einer Weiterbildung kann es deshalb vorgesehen sein, dass nach der Abscheidung die zunächst unstrukturierte also nicht streuende Metallschicht angeätzt wird, wodurch eine streuende Wechselwirkung mit Licht erreicht werden kann, insbesondere ohne gezielt strukturieren zu müssen. Besonders vorteilhaft ist dies mit Silber als Metall vorgesehen.

Eine raue Metallschicht kann auch erzeugt werden, indem zunächst die Unterlage angeraut und anschließend die Metallschicht abgeschieden wird. Das Anrauen kann durch eine mechanische Behandlung der Oberfläche, durch Bestrahlung mit Ionen, Plasmabehandlung, chemische Behandlung und andere Verfahren erzeugt werden. Es kann auch die auf einem anderen Substrat erzeugte raue Oberfläche (z.B. ein strukturgeätzter Silizium-Wafer) auf die Oberfläche des Wellenleiters übertragen werden, auf der dadurch die streuende Struktur erzeugt wird. Die Übertragung kann z.B. durch Nanoimprint, Embossing, Cast and Cure oder ähnliche Verfahren erfolgen.

Des Weiteren können metallische Nanopartikel (nanodots, nanowires oder ähnliche) direkt aufgebracht werden, z.B. durch Spraycoating, Dipcoating, diverse Drucktechniken oder andere Abscheideverfahren beispielsweise aus Suspension. Zur Vermeidung größerer Agglomerate erscheint insbesondere das Spraycoating vielversprechend. So können beispielsweise sehr dünne Schichten aus Silbernanodrähten produziert werden, die starke diffuse Streuung zeigen, in Wachstumsrichtung noch teilweise durchsichtig und infolge sich überlappender Nanodrähte in lateraler Richtung leitfähig sind. Diese können also als weiße streuende Struktur und gleichzeitig als Elektrode eingesetzt werden. Es kann es auch vorgesehen sein, dass die Nanopartikel eine Größe von zumindest mehr als 100 Nanometer haben, insbesondere damit deren Absorptionswirkung gegenüber deren Streuwirkung in den Hintergrund tritt. Die so entstehende breitbandige (weiß erscheinende) Streuung wird lokal durch Reflexion an metallischen Oberflächen erzeugt. Neben dieser lokalen metallischen Reflexion, kann auch eine lokale Reflexion zwischen transparenten, dielektrischen Materialien genutzt werden. So können transparente Nanopartikel oder Kristallite in eine ebenfalls transparente Polymermatrix eingebettet werden, die jedoch einen entweder höheren oder niedrigeren Brechungsindex aufweist. Anstelle von Nanopartikeln können in der Matrix auch Lufteinschlüsse (z.B. durch breath figure) erzeugt werden. Ebenfalls ist eine Entmischung zwischen mindestens zwei Polymeren (z.B. Blockcopolymeren) unterschiedlichen Brechungsindexes nutzbar, um streuende also statistische Strukturen zu erzeugen. In jedem Fall ist die Gesamtstruktur aus Matrix und Streuelement dünn genug auszuführen, um wieder mit dem Knotenkonzept vereinbar zu sein.

Eine beugende Struktur kann durch periodische Änderungen des Höhenprofils oder des Brechungsindexprofils wenigstens in Richtung der Ausbreitung der geführten Mode erzeugt werden. Eine solche für die Mode als Beugungsgitter wirkende Struktur kann beispielsweise selbstorganisiert durch die bereits genannte Entmischung durch Phasenseparation zwischen mindestens zwei Polymeren (z.B. Blockcopolymeren) erfolgen, die also auch periodische Strukturen hervorbringen kann. Die Gitter können auch lithografisch erzeugt werden. Neben Elektronenstrahllithografie kann klassische Fotolithografie angewendet werden. Da die benötigten Strukturen periodisch sind, können aber auch Interferenzlithografie, Displacement Talbot Lithography (DTL) oder andere auf großen Flächen einfachere Lithografie-Methoden zum Einsatz kommen. Das elektronenstrahl- oder fotoempfindliche Material kann dabei zusätzlich aufgetragen werden, um die Struktur zu erzeugen. Beim lift-off würde es unter der späteren Struktur, beim Ätzen über der Struktur abgeschieden. In beiden Fällen würde das elektronenstrahl- oder fotoempfindliche Material nach der Strukturierung entfernt. Als weitere Möglichkeit könnte die Struktur selbst ein entsprechend sensitives Material beinhalten oder vollständig daraus bestehen, so dass die lithographische Strukturierung zu einer Beeinflussung entweder der geometrischen Oberfläche oder des Brechungsindex der Struktur oder beider Eigenschaften führt. Der nach der Strukturierung verbleibende Teil des sensitiven Materials würde in diesem Fall in der Struktur verbleiben.

Im Gegensatz zu den beschriebenen Verfahren, beugende Strukturen lithografisch auf dem Wellenleiter zu erzeugen ist es besonders bevorzugt, Höhenprofile durch replizierende Verfahren mechanisch auf den Wellenleiter zu übertragen. Dieses Verfahren erscheint deshalb vorteilhaft, weil sehr effiziente Blaze-Gitter durch Ritzen mit Diamantwerkzeugen hergestellt werden. Natürlich ist es denkbar, dieses Verfahren direkt auf den Wellenleiter anzuwenden. Allerdings ist dieses Verfahren langsam. Da die Wellenleiter in einer sehr bevorzugten Form aus quervernetzbaren hochtransparenten Polymeren bestehen, deren Oberflächenstruktur sehr gut durch mechanisches Prägen beeinflussbar ist, ist es daher vielversprechend, geritzte Originale durch Nanoimprint, Embossing, Cast and Cure oder ähnliche Verfahren auf die untere transparente Schicht des Wellenleiters zu übertragen. Bei der Auslegung der Originale ist zu beachten, dass es bei der Übertragung zu einer Invertierung der Struktur kommt. Gemäß der oberen Definition wird durch die Übertragung der strukturierte obere Teil der unteren transparenten Schicht des Wellenleiters zur Struktur. Wenn dann diese Struktur jedoch durch Beschichtung mit dem oberen transparenten Polymer gleichen oder zumindest sehr ähnlichen Brechungsindexes beschichtet würde, so würde die strukturierte Grenzfläche eingeebnet und damit die beugende Wirkung vollständig oder zumindest nahezu vollständig zerstört. Die final wirksame Struktur wird also erst durch Beschichtung der strukturierten Oberfläche mit einem Material erzeugt, dass sich bzgl. seiner optischen Eigenschaften vom darunter liegenden strukturierten Material unterscheidet. Diese Beschichtung kann mit Metallen, Dielektrika unterschiedlichen Brechungsindexes, Partikeln oder anderen oben beschriebenen Mitteln geschehen. Erst nach dieser Beschichtung kann das obere Wellenleiterpolymer aufgetragen werden. Dieses Auftragen des oberen Polymers kann in einer bevorzugten Ausführung auch durch Lamination geschehen. Dadurch ist insbesondere die Realisierung symmetrischer Strukturen denkbar.

Beugende Strukturen werden im Gegensatz zu streuenden Strukturen bevorzugt, insbesondere wenn für die Auskopplung eine Farb- oder Richtungsselektivität gewünscht wird.

Als Mittel zur relativen Verschiebung des Knotens einer geführten Wellenleitermode und der Struktur zueinander sind grundsätzlich zwei Ansätze denkbar.

Erstens kann nicht erfindungsgemäß die Struktur im Wellenleiter mechanisch verstimmt, insbesondere örtlich verlagert werden. Dazu können mikro- oder nanomechanische Systeme, beispielsweise Metallmembranen, die elektrostatisch verschiebbar sind, zum Einsatz kommen. Diese Membranen würden damit zu einer Struktur, die in oder gegen die Wachstumsrichtung mechanisch verschoben werden kann. Infolge dieser Verschiebung würde sich auch die Knotenposition leicht verändern. Wesentlich ist jedoch, dass dabei die relative Lage der Struktur gegenüber der Knotenposition verschoben werden kann.

Zweitens bleibt die Struktur ortsfest im Wellenleiter, während der Wellenleiter erfindungsgemäß derart beeinflusst wird, dass sich die Knotenposition der geführten Mode leicht verändert. Diese Ausführung wird bevorzugt, weil sie technologisch einfacher zu realisieren ist und deutlich höhere Schaltgeschwindigkeiten verspricht. Hierbei ist grundsätzlich jedes Element oder jede Anordnung von mehreren Elementen zueinander geeignet, mit dem auf die Position des Knotens der im Wellenleiter propagierenden Transversal mode Einfluss genommen werden kann.

Beide Möglichkeiten können grundsätzlich auch miteinander kombiniert werden. Erfindungsgemäß wird ein solches Mittel gewählt, mit dem die optische Dicke wenigstens einer Schicht des Schichtstapels, bevorzugt von einer an die lichtauskoppelnde Struktur angrenzenden Schicht von wenigstens einem der Schichtaufbauten änderbar ist.

Eine solche Änderung wird nur zeitweise vorgesehen, also vorübergehend. Die Knotenposition kann also beispielsweise zwischen zwei oder mehreren Zuständen oder Werten hin- und hergeschaltet werden. Hierdurch erschließt sich die Möglichkeit die Auskopplung von Licht aus dem Wellenleiter bedarfsweise wiederholt durchzuführen und damit auch die Anwendung der Erfindung bei Displays, z.B. solchen mit einer Zeilen- und Spaltenanordnung von ansteuerbaren Subpixeln, die wenigstens einen erfindungsgemäßen Wellenleiter umfassen, wobei die Subpixel durch die jeweiligen Mittel zur zeitweisen Verschiebung des Knotens definiert sind.

Im Rahmen dieser Beschreibung wird von Subpixeln bei einem Display gesprochen, da solche Subpixel bei typischen Farbanwendungen einen üblicherweise monochromen Teil eines insgesamt farbigen Pixels bilden. Lediglich bei einem rein monochromen Display oder bei solchen Displays, die Subpixel zeitlich nacheinander verschieden monochromatisch ansteuern, ist ein benannter Subpixel als identisch mit einem Pixel des Displays anzusehen.

Als optische Dicke einer Schicht wird dabei das Produkt aus geometrischer Dicke der Schicht und Brechungsindex der Schicht verstanden. So können mit einem erfindungsgemäßen Mittel sowohl die geometrische Dicke, der Brechungsindex oder beides gleichzeitig beeinflussbar sein. Allgemein wird dabei unter einem Mittel nicht bloß ein einzelnes Element, sondern mehrere Elemente verstanden, die zusammenwirken, um den Effekt der Verlagerung von Knoten und Struktur zueinander zu erzeugen.

Erfindungsgemäß ist es vorgesehen, dass mit einem jeweiligen Mittel im Schichtstapel ein elektrisches Feld zeitweise erzeugbar ist. Ein solches jeweiliges Felderzeugungsmittel umfasst wenigstens zwei, bevorzugt genau zwei im oder am Schichtstapel angeordnete ansteuerbare Elektroden, insbesondere an die zur Verfahrensdurchführung von außen eine i.A. zeitabhängige elektrische Spannung angelegt wird, mit der im Schichtstapel ein elektrisches Feld zeitweise erzeugbar ist. Eine Spannungsquelle kann somit auch zum (Felderzeugungs-) Mittel dazugehörig verstanden werden.

Es ist dabei vorgesehen, dass wenigstens eine Schicht des Schichtstapels von dem erzeugbaren elektrischen Feld durchsetzt ist, bevorzugt kann es sich dabei um eine solche Schicht handeln, welche an die lichtauskoppelnde Struktur angrenzt, bevorzugt abstandslos. Beispielsweise kann es auch vorgesehen sein, dass zwei oder mehr Schichten des Schichtstapels von einem elektrischen Feld durchsetzt sind. Die elektrischen Felder in mehreren solcher Schichten können hinsichtlich Feldstärke und/oder Feldrichtung gleich, aber auch unterschiedlich sein.

Werden mehrere Schichten von einem elektrischen Feld durchsetzt, so kann die Erfindung bevorzugt vorsehen, dass mit dem Mittel zur Felderzeugung in jeder durchsetzten Schicht das Feld gleichzeitig erzeugt wird.

Bei der Durchsetzung von zwei Schichten mit einem elektrischen Feld, können diese Schichten bevorzugt um die Struktur herum angeordnet sein, also die Struktur von diesen beiden Schichten umschlossen sein.

Bei einer jeweiligen vom Feld durchsetzten Schicht kann es sich z.B. um die einzige Schicht von einem der beiden Schichtaufbauten des Schichtstapels handeln oder auch um eine Schicht von mehreren Schichten eines Schichtaufbaus.

Durch die Wirkung des elektrischen Feldes, das zeitweise erzeugt werden kann, kann eine Änderung der optischen Dicke der wenigstens einen vom Feld durchsetzten Schicht bewirkt werden, wodurch sich die Abstimmung des Wellenleiters ändert und sich damit die Knotenposition der Mode gegenüber der genannten Struktur verschiebt. In Abhängigkeit von der Feldwirkung kann somit lokal am Ort eines genannten Mittels eine Auskopplung von Licht bewirkt werden, wobei durch die Stärke des Feldes auch die Stärke der Auskopplung beeinflussbar ist.

In einer erfindungsgemäßen Alternative weist die von dem elektrischen Feld durchsetzte Schicht einen mit dem erzeugbaren elektrischen Feld änderbaren Brechungsindex auf.

Vorzugsweise wird für die vom Feld durchsetzte Schicht eine solche eingesetzt, bei welcher der Brechungsindex aufgrund des elektro-optischen Effektes änderbar ist. Z.B. ist eine Änderung des Brechungsindex durch den Pockels- oder Kerr-Effektes möglich.

In der anderen erfindungsgemäßen Alternative weist die von dem elektrischen Feld durchsetzte Schicht eine mit dem erzeugbaren elektrischen Feld änderbare geometrische Dicke auf, z.B. aufgrund des elektrostriktiven oder piezoelektrischen Effektes in der Schicht. Als Schicht, deren optische Dicke geändert wird, ist auch eine dielektrische Schicht denkbar, die durch Anlegen einer Spannung elektrokapazitiv verformt wird. Ebenfalls sind Flüssigkeiten oder Flüssigkristalle denkbar, die durch ein elektrisches Feld bzgl. ihrer optischen Dicke veränderbar sind.

In Ausführungsformen kann die Erfindung vorsehen, dass wenigstens eine der Elektroden eines Mittels an der Knotenposition oder zumindest im Bereich einer Knotenposition einer im Wellenleiter führbaren Wellenleitermode angeordnet ist.

So wird zum einen bewirkt, dass das elektrische Feld einen zentralen in der Nähe der Struktur liegenden Bereich des Wellenleiters durchsetzt, so dass Verschiebungen der Knotenposition schon mit vergleichsweise kleinen Spannungen zwischen den Elektroden möglich sind. Zum anderen führt die Positionierung wenigstens einer der Elektroden in oder nahe der Knotenposition dazu, dass diese Elektrode selbst nur geringfügig zur Lichtbeeinflussung beiträgt, da diese ebenso wie die Struktur allenfalls durch vernachlässigbare Lichtintensität der Mode beaufschlagt ist.

Als bevorzugter Bereich zur Anordnung einer Elektrode wird derjenige Bereich um die exakte Knotenposition herum verstanden, in welchem die Intensität kleiner ist als 1/e x Maximalintensität , bevorzugt kleiner als 1/10 x Maximalintensität, weiter bevorzugt kleiner als 1/100 x Maximalintensität und besonders bevorzugt kleiner als 1/1000 x Maximalintensität des nächsten neben dem Knoten liegenden Intensitätsmaximums. Dabei wird der Zustand betrachtet, wenn auf die propagierende Mode keine Kontenverschiebung einwirkt.

Die Erfindung kann vorsehen, dass alle Elektroden eines Mittels in einer Knotenposition oder zumindest im Bereich einer Knotenposition einer im Wellenleiter führbaren Wellenleitermode angeordnet sind. Bevorzugt sind dabei die Elektroden in zumindest einer der möglichen Propagationsrichtungen einer Wellenleitermode beabstandet. Flächenbereiche benachbarter Elektroden können dabei interdigital ineinandergreifend ausgebildet sein. So kann in einem Bereich um die lichtauskoppelnde Struktur herum effektiv ein elektrisches Feld zwischen den benachbarten Elektroden erzeugt und so die Knotenposition am Ort der Feldeinwirkung verschoben werden.

Bei einer Anordnung einer oder beider bzw. mehrerer Elektroden eines Mittels an der Knotenposition kann die Erfindung vorsehen, dass eine jeweilige ausgebildete Elektrode durch die lichtauskoppelnde Struktur selbst ausgebildet ist. Struktur und Elektrode werden somit gemeinsam ausgebildet. Dies kann fertigungstechnische Vorteile haben.

Eine jeweilige im Bereich der Knotenposition, jedoch nicht exakt in der Knotenposition ausgebildete Elektrode kann z.B. angrenzend, z.B. abstandslos angrenzend an die lichtauskoppelnde Struktur angeordnet sein. In einem schichtweise sukzessiven Fertigungsprozess zur Herstellung des Wellenleiters kann so eine Elektrode nach oder vor der Herstellung der Struktur in den Schichtaufbau des Wellenleiters eingebracht werden.

Eine Elektrode ist zu einer anderen Elektrode, die an der Knotenposition oder zumindest im Bereich der Knotenposition angeordnet ist, in Stapelungsrichtung beabstandet angeordnet. Diese beabstandete Elektrode kann z.B. angrenzend an den gesamten Schichtstapel, bevorzugt zwischen dem Substrat und dem Schichtstapel oder in einer anderen Knotenposition derselben führbaren Wellenleitermode angeordnet sein. Die beiden letztgenannten Ausführungen haben hier den Vorteil, dass auch diese beabstandete Elektrode außerhalb der Einwirkung von Lichtintensität der Mode liegt. Die Ausführung die Elektroden in derselben Knotenposition oder in zwei verschiedenen Knotenpositionen zweier Knoten der Wellenleitermode anzuordnen hat gegenüber der Anordnung einer oder beider Elektroden außerhalb des Schichtstapels den Vorteil, dass zur Änderung der optischen Dicke der an die Struktur angrenzenden Schicht geringere Spannungen benötigt werden, da durch den dann kleineren Elektrodenabstand schon mit den geringeren Spannungen eine genügend hohe Feldstärke erzielt wird, um die optische Dicke ausreichend zu ändern.

Um zu gewährleisten, dass eine solche in Stapelungsrichtung von einer ersten Elektrode beabstandete zweite Elektrode von gebeugtem oder gestreutem oder auf andere Weise abgelenkten Licht durchdrungen werden kann, kann die Erfindung vorsehen, die Elektrode transparent auszuführen, z.B. als TCO-Schicht (transparent conductive oxid). Weitere Möglichkeiten für transparente bzw. semitransparente Elektroden sind ultradünne Metallschichten, insbesondere die durch transparente Schichten stabilisiert werden, um Inselwachstum zu unterbinden. Solche Schichten werden bevorzugt dann als ultradünn bezeichnet, wenn sie Dicken unter 10nm aufweisen. Außerdem kommen Komposite in Frage, bei denen Kohlenstoff-Nanoröhren, Silber-Nanowires oder andere in eine transparente dielektrische oder halbleitende Matrix (beispielsweise Zinnoxid) eingebaut werden. Wie oben genannt sind auch Filme, die nur aus Silber-Nanowires bestehen, als semitransparente Elektroden denkbar, die gleichzeitig streuende Strukturen bilden können.

In einfachster Ausführung kann die Erfindung vorsehen, dass in einem Wellenleiter genau ein Mittel vorgenannter Art zur Bewirkung einer Knotenverschiebung vorgesehen ist.

Bevorzugte Ausführungen können vorsehen, aus wenigstens einem Wellenleiter, der mehrere Mittel der vorgenannten Art aufweist, ein Display aufzubauen. Solche mehreren Mittel sind bevorzugt als n x m - Matrix, mit n >= 1 und m > 1 ausgebildet, insbesondere wobei eine solche Matrix senkrecht zueinander orientierte Zeilen und Spalten aufweist.

Es erschließt sich so z.B. die Bildung eines Displays, bei dem ein Subpixel eines durch die Matrix gebildeten Displays durch denjenigen, insbesondere in der Stapelungsrichtung betrachteten Bereich definiert ist, in welchem das jeweilige Mittel die Änderung der relativen Lage des Knotens einer geführten Wellenleitermode und der Struktur zueinander bewirkt. Dort, wo eine solche Änderung vorliegt, kommt es somit zur Lichtauskopplung.

Bei in Stapelungsrichtung des Schichtstapels hintereinander liegenden Elektroden eines Mittels ist ein Subpixel somit zumindest im Wesentlichen durch die geometrischen Außenränder einer Elektrode umgrenzt, insbesondere durch das Volumen zwischen den Außenrändern zweier Elekroden. Zumindest wird ein Bereich zum Leuchten gebracht, der zwischen den sich in Stapelungsrichtung überlappenden Flächenbereichen der Elektroden liegt. Dabei können bevorzugt die in Stapelungsrichtung beabstandeten Elektroden bei Betrachtung in dieser Stapelungsrichtung deckungsgleich sein. Dies ist jedoch nicht zwingend nötig. Bevorzugt ist hier zumindest die in Abstrahlungsrichtung liegende Elektrode transparent.

Bei in Ausbreitungsrichtung der Wellenleitermode insbesondere in einer gemeinsamen Knotenposition angeordneten Elektroden ist ein Subpixel ebenso durch den Bereich definiert, der durch die ihm zugeordneten Mittel zum Leuchten gebracht wird. Dabei liegt jedoch kein Überlapp oder allenfalls geringer Überlapp zwischen den Elektrodenflächen in der Richtung der Beabstandung vor. Bevorzugt handelt es sich dabei zumindest um einen Bereich, der zwischen den sich gegenüberliegenden Elektrodenkanten von zwei in der Ausbreitungsrichtung beabstandeten Elektroden liegt, die Teil des Mittels sind. Der insgesamt leuchtende Bereich wird diesen genannten Bereich zwischen den Elektrodenkanten zumindest umfassen und regelmäßig größer sein, da sich das elektrische Feld nicht nur zwischen den Kanten erstreckt.

In monochromen Ausführungen eines Displays kann ein jeweiliges Subpixel den alleinig leuchtenden Bildbereich jeder Matrixposition in einer n x m - Matrix bilden. Ein solches Subpixel bildet daher - wie eingangs genannt - in diesem Spezialfalls eines Display gleichzeitig das Pixel.

Bei Farbdisplays kann es vorgesehen sein, dass ein Subpixel der eingangs genannten Definition eine von mehreren, bevorzugt eine von mindestens drei Untereinheiten eines insgesamt farbig leuchtenden Pixels jeder Matrixposition der n x m - Matrix eines Displays bildet.

In einer möglichen Ausführung können in einem Wellenleiter mehrfach solche jeweiligen Mittel angeordnet sein, um Knoten zu verschieben und so Licht am Ort des jeweiligen Mittels auszukoppeln. Die mehreren Mittel sind sodann an verschiedenen Orten des Wellenleiters angeordnet, so dass durch selektive Ansteuerung der Mittel die Auskopplung von Licht bei diesem Wellenleiter an verschiedenen, durch die Ansteuerung auswählbaren Orten bewirkt werden kann. Beispielsweise kann es vorgesehen sein, dass mehrere Mittel in den parallel zu den Schichten liegenden Ausbreitungsrichtungen mehrfach nebeneinanderliegend angeordnet sind. Solche mehreren Mittel können in bevorzugter Ausführung eine n x m - Matrix ausbilden, mit n>=1 und m>1, wobei durch jedes Mittel sodann auch jeweils ein Subpixel ggfs. auch gleich ein Pixel definiert ist In einer Ausführung kann es somit vorgesehen sein, dass ein Display eine der Subpixelanzahl entsprechende Anzahl von Elektrodenpaaren aufweist.

In einer anderen Ausführung kann es auch vorgesehen sein, dass ein jeweiliges Mittel zwei Elektroden umfasst, aber für alle oder zumindest eine Gruppe von Mitteln eine der zwei Elektroden auf jeweils demselben Potential liegt, insbesondere also diese Mittel eine gemeinsame Masse-Elektrode bilden. Allgemein kann eine Elektrode auch ein Element eines anderen Mittels, insbesondere eines benachbarten Mittels sein.

Die Erfindung kann aber auch eine Ausführung vorsehen, bei der ein Wellenleiter, insbesondere ein einziger Wellenleiter eine erste Gruppe von mehreren parallel nebeneinander liegenden Elektroden umfasst, die jeweils in einer ersten möglichen, parallel zu den Schichten liegenden Ausbreitungsrichtung längserstreckt sind und er eine zweite Gruppe von mehreren parallel nebeneinander liegenden Elektroden umfasst, die jeweils in einer zweiten möglichen, parallel zu den Schichten liegenden Ausbreitungsrichtung längserstreckt sind.

Die beiden möglichen Ausbreitungsrichtungen können bevorzugt senkrecht zueinander liegen, insbesondere um ein vorgenanntes n x m - Display auszubilden. Die Elektroden der einen Gruppe können somit Zeilenelektroden und die Elektroden der anderen Gruppe Spaltenelektroden bilden.

Diese Ausführung sieht weiterhin vor, dass die erste und die zweite Gruppe in Stapelungsrichtung beabstandet sind. Dabei liegt eine vom elektrischen Feld durchsetzbare Schicht, deren optische Dicke feldabhängig änderbar ist, in Stapelungsrichtung zwischen den beiden Gruppen.

Bei dieser Ausführung wird ein jeweiliges Mittel gebildet durch die in Stapelungsrichtung überlappend angeordneten Flächenbereiche von Elektroden der ersten und zweiten Gruppe. Jede einzelne Elektrode ist dabei immer einer ganzen Zeile oder einer ganzen Spalte von Subpixelzugeordnet. Durch Ansteuerung einer Elektrode aus der einen Gruppe und einer Elektrode aus der anderen Gruppe, also einer Zeilen- und einer Spaltenelektrode im obigen Sinne mit unterschiedlichem elektrischen Potential, die der Zeile und Spalte eines gewünschten Subpixelentsprechen, wird somit bewirkt, dass ein elektrisches Feld dort erzeugt wird, wo sich die beiden Elektroden in Stapelungsrichtung betrachtet kreuzen, so dass aus dem Kreuzungsort Licht ausgekoppelt wird, dieser Kreuzungsort somit einen Subpixel darstellt.

Ein Display erfindungsgemäßer Art kann in bevorzugter Ausführung genau einen Wellenleiter aufweisen. Ein solcher Wellenleiter kann gemäß der vorgenannten Ausführungen alle subpixeldefinierenden Mittel des Displays umfassen. Der Wellenleiter kann dabei ein Längen/Breiten-Verhältnis aufweisen, welches zumindest im Wesentlichen dem Verhältnis der Subpixelanzahl in den jeweiligen Richtungen entspricht.

In anderer Ausführung kann in einem Display jeder Zeile von Subpixeln wenigstens ein separater Wellenleiter zugeordnet sein, wobei die Mittel zur Änderung der optischen Dicke senkrecht zur Längserstreckungsrichtung dieser Wellenleiter die Spalten definieren. So kann durch Einschalten einer Lichtquelle ein jeweiliger separater und nur dieser Lichtquelle zugeordneter Wellenleiter mit Licht versorgt werden und bei der so definierten lichtgefluteten Zeile das zur Spalte gehörige Mittel angesteuert werden, um an dem gewünschten Subpixel die Auskopplung zu bewirken. Ein leuchtender Subpixelkann so sehr schnell durch eine kombinierte lichttechnische und elektrische Auswahl angesteuert werden.

Hierbei kann jeder separate Wellenleiter durch einen im Wesentlichen streifenförmigen Wellenleiter ausgebildet sein, insbesondere wobei in Längserstreckungsrichtung eines solchen Streifens alle Subpixel einer Zeile hintereinanderliegend angeordnet sind. Die streifenförmige Ausbildung erfolgt im Sinne der Erfindung also zunächst mit der Zielsetzung, jeder Zeile des späteren Displays einen einzelnen Wellenleiter zuzuordnen. Wenn die Breite dieses Streifens ausreichend groß gegenüber der Wellenlänge des geführten Lichts ist, so kann dieser streifenförmige Wellenleiter physikalisch gesehen weiterhin in guter Näherung als Filmwellenleiter betrachtet werden. Erst wenn die Breite derart stark reduziert wird, dass in dieser Richtung die Mehrmodigkeit deutlich eingeschränkt wird, die HEₙₘ bzw. EHₙₘ also nicht mehr wegen sehr großen m zu den Filmmoden TEₙ bzw. TMₙ genähert werden können, ist der streifenförmige Filmwellenleiter als Streifenwellenleiter im physikalischen Sinn zu betrachten. Derartige tatsächliche Streifenwellenleiter können durch das Vorhandensein lateraler Intensitätsminima im Sinne der Erfindung ausgenutzt werden, indem auch in Richtung der Breite des Streifenwellenleiters die beschriebene Struktur auf die Knotenposition beschränkt wird. In diesem Fall ist die Struktur nicht (voll-)flächig in einer Ebene parallel zur Substratoberfläche angeordnet, sondern linienförmig, allenfalls streifenförmig. Dieses entspricht weiterhin dem erfindungsgemäßen Vorgehen, das dann lediglich über die Wachstumsrichtung hinaus auch noch in der lateralen Richtung angewendet werden kann. Im Folgenden soll grundsätzlich von streifenförmigen Wellenleitern gesprochen werden. Damit ist im Folgenden die Zuordnung des Wellenleiters zu einer Displayzeile gemeint. Der Streifenwellenleiter kann dabei ein streifenförmiger Filmwellenleiter sein, kann aber auch ein tatsächlicher Streifenwellenleiter im physikalischen Sinn sein. Im letzteren Fall kann die erfindungsgemäße Platzierung der Struktur im Knoten über die Wachstumsrichtung hinaus auf die laterale Richtung der Streifenbreite übertragen sein.

Der wenigstens eine Wellenleiter eines Displays kann allgemein und somit unabhängig von der konkreten Ausbildung der Zeilen- und Spaltenbildung einer Display-Matrix wenigstens eine Lichtquelle zur Einkopplung von Licht aufweisen. Das Licht der Lichtquelle kann über einen Einkoppler in den Wellenleiter eingekoppelt sein. Z.B. kann ein Einkoppler durch ein Gitter gebildet sein, das in die Oberfläche des Wellenleiters eingebracht ist und vom einzukoppelnden Licht unter dem zur Einkopplung benötigten Winkel beleuchtet ist.

Dabei kann bevorzugt die Intensität des von der Lichtquelle erzeugten Lichtes in Abhängigkeit zumindest der Anzahl aktuell zur Änderung der Knotenposition angesteuerter Mittel änderbar sein. Insbesondere kann so mit steigender Anzahl der angesteuerten Mittel die Intensität der Lichtquelle erhöhbar sein. Die Erfindung kann auch vorsehen, mit zunehmender Intensität des an einem jeweiligen Mittel auszukoppelnden Lichtes die Intensität der Lichtquelle zu erhöhen.

Die am Ort eines Mittels bzw. bei einem Subpixel auszukoppelnde Licht-Intensität kann bevorzugt über die Größe der Feldstärke gewählt werden, die mit dem betreffenden Mittel eingestellt wird. Die Erfindung kann daher vorsehen die Intensität der Lichtquelle in Abhängigkeit (auch) der Feldstärke bzw. der über einem Mittel angelegten Spannung zu ändern, insbesondere mit zunehmender Feldstärke die Intensität der Lichtquelle zu erhöhen.

Mit der Erfindung kann bewirkt werden, dass bevorzugt jedes Subpixel eines solchen Wellenleiters bei gleicher angelegter Spannung immer dieselbe Lichtintensität ausgibt, unabhängig davon wieviele Subpixel gleichzeitig angesteuert sind, bevorzugt auch unabhängig davon wie hell die jeweiligen Subpixel sind.

Eine solche Arbeitsweise eines Wellenleiters oder eines wenigstens einen solchen Wellenleiter umfassenden Displays kann als eine Nachsteuerung der Intensität der Lichtquelle(n) in Abhängigkeit der durch Auskopplung ausgegebenen Gesamtintensität bezeichnet werden.

Wellenleiter der vorgenannten Art oder diese umfassende Displays können monochrom oder auch farbig betrieben werden.

Bevorzugt kann ein monochromes Display ausgebildet werden, wenn der wenigstens eine Wellenleiter eines Displays von einer einzigen Lichtquelle versorgt wird, bzw. bei mehreren Wellenleitern im Display alle Lichtquellen dasselbe Spektrum aufweisen.

Um eine farbige Darstellung in einem Display, insbesondere der zuvor beschriebener Art zu erhalten, kann die Erfindung in einer möglichen Ausführung vorsehen, über einen jeweiligen Subpixel zeitlich nacheinander verschiedene Lichtspektren auszugeben, wofür ein Display oder jeder darin vorgesehene Wellenleiter bevorzugt wenigstens drei Lichtquellen umfasst, die zeitlich nacheinander ansteuerbar sind und jeweils Licht mit unterschiedlichem Lichtspektrum emittieren, welches in den jeweiligen Wellenleiter des Displays eingekoppelt wird. Ein solcher Betrieb kann auch als Zeitmultiplex der Lichtquellen bezeichnet werden.

In einer anderen Ausführung zur farbigen Darstellung in einem Display besteht die Möglichkeit, jeden farbig leuchtenen Pixel in Untereinheiten zu unterteilen, wobei jede Untereinheit einen andersfarbigen Subpixel bildet. Jeder Subpixel ist wiederum durch das Mittel definiert, welches die Knotenverschiebung der Mode bewirkt, wobei hier mit den Mitteln verschiedener Untereinheiten eines farbig erscheinenden Bildbereiches jeweils Licht einer anderen Wellenlänge aus dem Wellenleiter ausgekoppelt wird.

Dies kann z.B. dadurch erfolgen dass jede Untereinheit eine andere, die Lichtausbreitung beeinflussende Struktur aufweist.

Z.B. kann jede Untereinheit ein anderes Gitter / eine andere Gitterperiodizität aufweisen, welches in derselben Beugungsrichtung Licht verschiedener spektraler Zusammensetzung aus dem Wellenleiter auskoppelt. Auch kann jede Struktur ein anderes Farbfilter, insbesondere als Bandpass ausgebildetes Farbfilter aufweisen welches von der Wellenleitermode nur den zum Filter passenden spektralen Bereich bei der Auskopplung passieren lässt. Bei diesen Ausführungen wird bevorzugt vorgesehen, dass in der Wellenleitermode Weißlicht propagiert, also Licht mit einer die spektrale Empflindlichkeit des Auges abdeckenden Wellenlängenzusammensetzung. Aus diesem Gesamtspektrum wird somit mit jeder Struktur ein anderer Wellenlängenbereich ausgekoppelt.

In anderer Ausführung kann durch die Struktur eines jeweiligen Subpixels eine jeweils andere Wellenlängenkonvertierung vorgenommen werden. Z.B. können hierfür in der Struktur jedes Subpixels eines Pixels andere Wellenlängenkonvertierende Stoffe eingesetzt werden, insbesondere verschiedene Phosphore. In dieser Ausführung kann in dem wenigstens einen Wellenleiter eines Displays eine Mode propagieren, deren Wellenlänge bevorzugt die verschiedenen Konversionen ermöglicht. Bevorzugt kann eine Wellenlänge der Wellenleiter-Mode gewählt werden, die der kürzestwelligen Farbe des Displays entspricht, somit diese kürzestwellige Farbe durch weiße Streuung und die längerwelligen durch Lumineszenz erzeugt werden. In einer anderen Ausführung kann eine Wellenlänge der Wellenleiter-Mode gewählt werden, die kürzerwellig ist als alle Farben des Displays (insbesondere also eine Wellenlänge im Violetten oder Ultravioletten) und somit alle diese Farben des Display durch Lumineszenz erzeugt werden.

Subpixel, welche Untereinheiten eines farbig leuchtenden Pixels eines Display bilden, können räumlich nebeneinander, aber auch räumlich gestapelt in jeweils anderer Stapelebene eines Wellenleiters angeordnet sein, insbesondere in Stapelungsrichtung betrachtet versetzt zueinander.

Eine Ausführung der Erfindung kann somit vorsehen, dass in einem Display mehrere Wellenleiter, bevorzugt mindestens drei Wellenleiter gestapelt übereinander angeordnet sind, insbesondere wobei die verschiedenen gestapelten Wellenleiter Lichtquellen zur Einkopplung von Licht aufweisen, deren Wellenlängenspektrum verschieden ist, insbesondere derart, dass sie gemeinsam einen gewählten Farbraum abdecken.

Die zu einem farbig leuchtenden Pixel des Displays gehörenden Subpixel und die sie definierenden mehreren Mittel der gestapelten Wellenleiter sind dabei bevorzugt in Stapelungsrichtung nicht-fluchtend, insbesondere versetzt angeordnet.

Bevorzugt entspricht die Stapelungsrichtung einer Richtung, die senkrecht angeordnet ist zu der Ausbreitungsrichtung, insbesondere zumindest senkrecht zur mittleren Ausbreitungsrichtung der im Wellenleiter propagierenden Mode. Die Stapelungsrichtung entspricht bevorzugt der Wachstumsrichtung der Schichten bei deren Herstellung.

So wird durch wenigstens drei benachbart und in verschiedenen Schichtebenen liegende Subpixel Licht von unterschiedlichem Spektrum abgestrahlt und so insgesamt ein farbiges Pixel erzeugt, der die bevorzugt wenigstens drei Subpixel umfasst. Die Mittel der benachbart liegenden Subpixel eines solchen farbigen Bildbereiches können hierbei zeitgleich zur Bewirkung der Lichtauskopplung angesteuert werden.

Jeder Wellenleiter eines Displays kann jedoch auch - wie zuvor genannt - allgemein mehrere separate Lichtquellen umfassen, wobei mit jeder der separaten Lichtquellen Licht eines anderen Wellenlängenspektrums erzeugbar ist und die verschiedenen Lichtquellen zeitlich nacheinander gesteuert sind, um mit jedem Pixel das Licht von allen Wellenlängenspektren nacheinander zu emittieren. So wird ein farbig erscheinender Bildbereich nur durch einen Subpixel und dessen Ansteuerungsmittel (Elektroden) gebildet, wobei der farbige Eindruck durch die Trägheit des menschlichen Auges hervorgerufen wird. In diesem Fall gibt es somit keine konstruktiven bzw. geometrischen Untereinheiten, der einzige Subpixel wird durch seine zeitlich hintereinander liegende mehrfache Beleuchtung mit verschiedenen Farben zum farbigen Pixel.

Ausführungsbeispiele werden nachfolgend beschrieben.

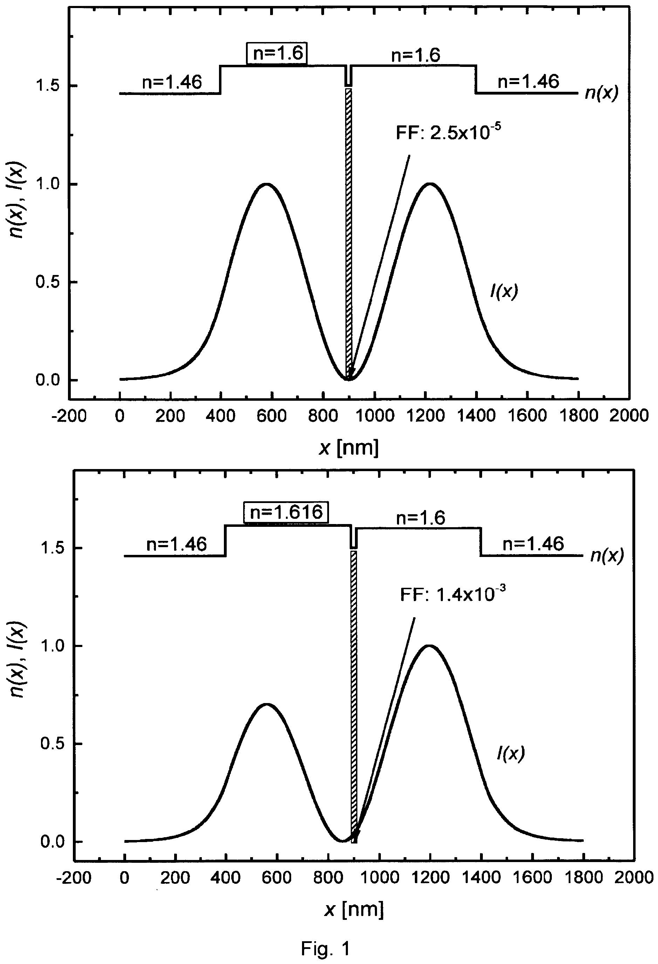

Figur 1 zeigt die Intensitätsverteilung *I(x)* einer TE₁-Mode der Wellenlänge 532nm, die mit einem Transfermatrix-Algorithmus für das ebenfalls angegebene Brechzahlprofil n(x) eines Wellenleiters ermittelt wurde. Die Näherung der Filmmode TE₁ gilt für Wellenleiter, die in den lateralen Richtungen eine ausreichend große Ausdehnung besitzen. Wie oben beschrieben wird diese Voraussetzung häufig auch für streifenförmige Wellenleiter im Sinne der Erfindung erfüllt sein.

Im Sinne der Erfindung ist die Mode der Wahl bei solchen Filmwellenleitern üblicherweise TE₁, denkbar sind aber auch TM₁, sowie entsprechend höhere Moden TEₙ, TMₙ mit n>1. Nur in sehr schmalen streifenförmigen Wellenleitern ist die Mode der Wahl üblicherweise die entsprechend abgeleitete Mode mit einem Knoten in Wachstumsrichtung HE₁₀. Denkbar sind hierbei aber auch EH₁₀, sowie allgemein alle Moden HEₙₘ und EHₙₘ mit n≥1. Die Zahl der Knoten m in Richtung der Streifenbreite ist dabei beliebig.

Figur 1 beschränkt sich also beispielhaft auf die üblicherweise gewählte Filmmode. Der höherbrechende, für die Führung der Mode maßgebliche Teil des Wellenleiters wird zwischen x=400nm und x=1400nm gebildet, wobei die Mode auch evaneszent in den niederbrechenden Außenbereich (x<400nm, x>1400nm, Index 1,46) hineinragt, der in der Berechnung als unendlich dick angenommen wurde. In der Realität sollte die Dicke dieses äußeren Bereiches groß sein gegen die Wellenlänge. Der höherbrechende Bereich mit einer Gesamtdicke von 1µm setzt sich dabei aus zwei äußeren Schichten einer Dicke von 490nm und einer inneren Schicht zusammen. Die innere Schicht mit einer Dicke von 20nm und einem angenommenen Brechungsindex von 1,5 soll die Struktur repräsentieren.

Der Transfermatrix-Algorithmus beschreibt nur die vereinfachte Lösung eines idealen unendlich ausgedehnten Filmwellenleiters. Entsprechend setzt der Algorithmus perfekte Schichten voraus. Für die Struktur ist diese Voraussetzung streng genommen nicht erfüllt, da diese ja eben nicht planar im Sinne einer idealen Schicht sein darf, sondern rau oder wenigstens inhomogen bzgl. des Brechungsindexes oder der Absorption.

Trotzdem kann man annehmen, dass die Inhomogenität im Inneren der sehr dünnen Struktur, die sich im oder wenigstens nahe des Knotens des Wellenleiters befindet nicht zu einer merklichen Änderung des Füllfaktors (im Bild abgekürzt mit FF) der TE₁-Mode innerhalb dieser Struktur führt. Die Gültigkeit dieser Annahme ist durch einige Vorexperimente mit dünnen streuenden Strukturen bestätigt worden.

Unter der beschriebenen vereinfachenden Annahme kann man mit der Simulation den Füllfaktor der Mode mit der Struktur bestimmen. Diese gibt ein gutes Maß dafür, wie stark die Mode mit der Struktur wechselwirkt.

Ein guter Wellenleiter im Sinne der Erfindung ist also einer bei dem die Mode der Wahl bei einer durch das Mittel hervorgerufenen Verstimmung eine maximale Änderung des Füllfaktors innerhalb der Struktur erfährt.

Das Beispiel in Figur 1 zeigt einen ohne Verstimmung vollständig symmetrischen Wellenleiter. Vorteil dieser Symmetrie ist, dass sich der Knoten der TE₁-Mode unabhängig von der Wellenlänge also Farbe des Lichts immer genau in der Mitte des Wellenleiters befindet. Gleiches gilt für alle TEₙ und TMₙ-Moden mit ungeradem n. Symmetrische Wellenleiter sind deshalb ganz allgemein im Sinne der Erfindung bevorzugt, weil sie die erfindungsgemäße Funktionalität breitbandig ermöglichen. Insbesondere für Farbdisplays sind solche Wellenleiter also besonders vorteilhaft.

Um diese Symmetrie zu brechen wird in der Simulation angenommen, dass der Brechungsindex einer der äußeren, die Struktur umgebenden hochbrechenden Schichten (ursprünglich 1,6) um ein Prozent auf 1,616 erhöht wird. Dabei bleibt der Brechungsindex aller übrigen Schichten erhalten. Resultat dieser leichten Verstimmung des Wellenleiters ist eine Erhöhung des Füllfaktors von 2,5×10⁻⁵ auf 1,4×10⁻³. Eine Erhöhung des Brechungsindexes einer Schicht um ein Prozent ändert also den Füllfaktor der Struktur in diesem Beispiel um den Faktor 56 (5600 Prozent). Bevorzugt erhöht sich allgemein der Füllfaktor mindestens um den Faktor 10. Diese große Änderung ist wesentlich für die erfinderische Funktion des Wellenleiters. Sie ist ebenfalls direkt verknüpft mit dem Kontrast des auf diesem Prinzip basierenden Displays.

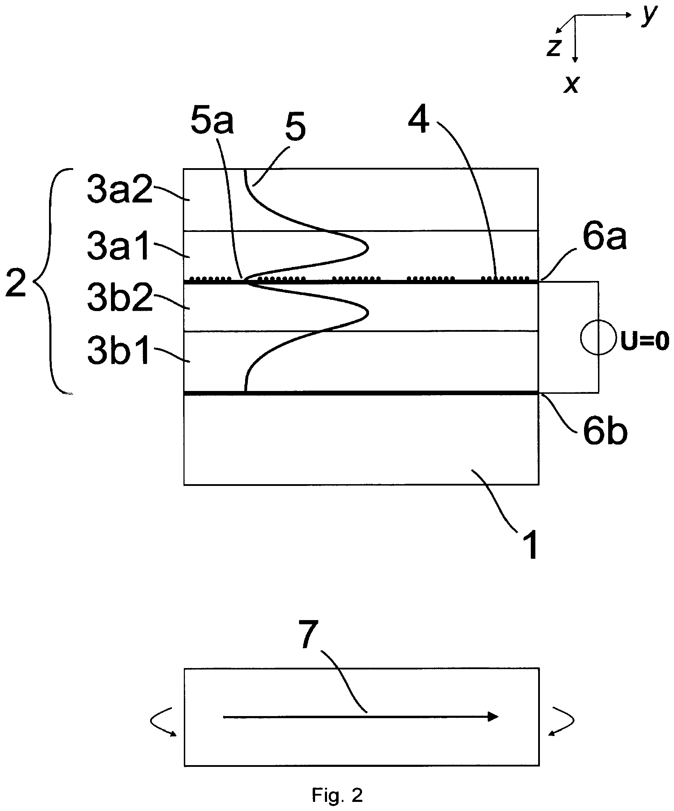

Die Figur 2 zeigt einen erfindungsgemäßen Wellenleiter mit einem hier unten liegenden Substrat 1, auf welchem übereinanderliegend zwei Schichtaufbauten 3a und 3b angeordnet sind. Jeder Schichtaufbau umfasst in dieser Ausführung zwei transparente dielektrische Schichten 3a1, 3a2 bzw. 3b1 und 3b2, wobei zwischen den Schichtaufbauten 3a und 3b eine lichtauskoppelnde Schicht 4 angeordnet ist. Diese kann hier z.B. als mit Partikeln bedeckte Metallschicht ausgebildet sein.

Durch Anpassung der Schichtdicken und geeignete Wahl der Brechungsindizes der Schichtmaterialien wird bewirkt, dass sich im Wellenleiter das eingekoppelte Licht als transversale Mode 5 mit - in diesem Beispiel - genau einem Knoten 5a ausbildet, dessen Position mit der Position der lichtauskoppelnden Schicht 4 übereinstimmt. Die Propagation der Mode wird somit im Wellenleiter durch die Schicht 4 nahezu nicht gestört.

Gemäß dem unteren Bereich der Figur 2 kann die gebildete Mode somit im Wellenleiter verlustarm propagieren, gemäß Pfeil 7. An den Enden des Wellenleiters kann eine reflektierende Beschichtung erfolgen, um dort eine Reflexion zu erreichen (symbolisiert durch die gekrümmten Pfeile).

Die Erfindung sieht vor, dass beispielsweise angrenzend an die lichtauskoppelnde Schicht 4 eine Elektrode 6a platziert ist und zwischen Substrat und der ersten Schicht des unteren Schichtaufbaus 3b eine weitere Elektrode ausgebildet ist. Im unteren Schichtaufbau 3b ist die obere Schicht 3b2 als Schicht mit elektro-optischen Eigenschaften ausgewählt, deren Brechungsindex also mit einem elektrischen Feld beeinflusst werden kann, welches zwischen den Elektroden 6a und 6b ausgebildet werden kann.

Die Figur 2 visualisiert den Fall ungestörter Modenausbreitung, also ohne angeschaltetes Feld, wo also die Knotenposition 5a mit der Position der auskoppelnden Schicht 4 übereinstimmt.

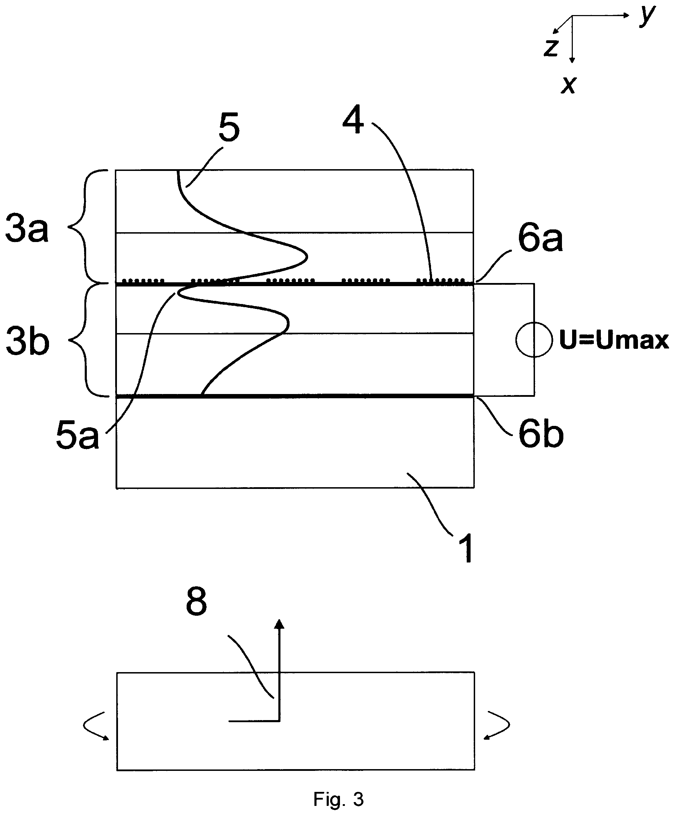

Gemäß Figur 3 ist ein elektrisches Feld zwischen den Elektroden 6a und 6b ausgebildet, was zu einer lokalen Brechungsindexänderung im Schichtaufbau 3b, hier z.B. in der Schicht 3b2 gemäß Figur 2 führt. Dadurch wird der Wellenleiter derart verstimmt, so dass sich im Wellenleiter die Knotenposition gegenüber der Schicht 4 verschiebt. Hierdurch wechselwirkt eine signifikante Intensität des transversalen Modenprofils mit der Schicht 4, so dass Licht gemäß Pfeil 8 aus dem Wellenleiter ausgekoppelt wird. Im Gegensatz zu Figur 1 sind die Intensitätsprofile in den Figuren 2 und 3 keine exakten Lösungen, sondern dienen als Skizzen lediglich zur Visualisierung.

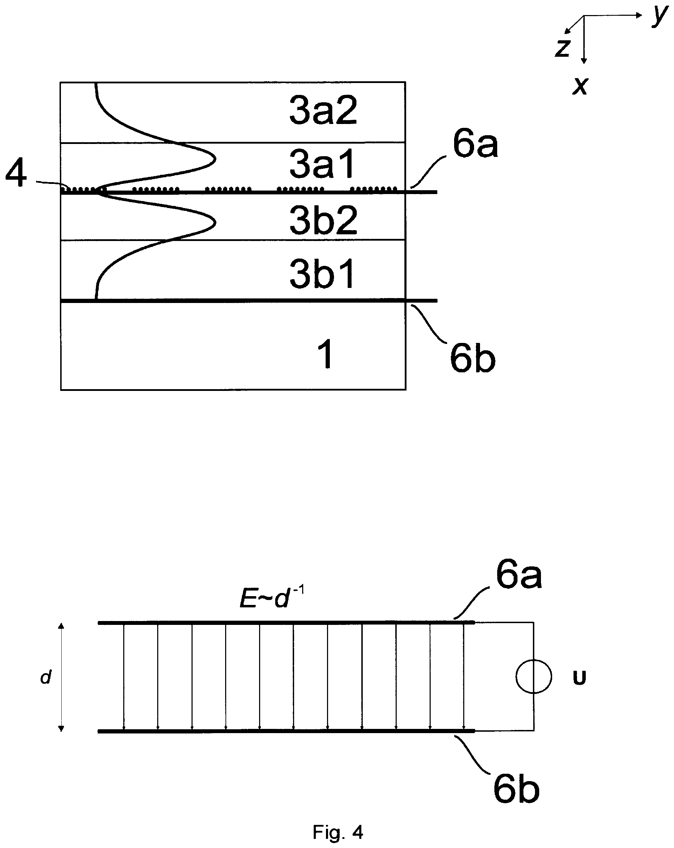

Die Figuren 4 bis 6 zeigen verschiedene Ausführungen der Elektrodenpositionierung. Bei diesen erfindungsgemäßen Ausführungen ist die Struktur ortsfest im Wellenleiter, während der Wellenleiter derart beeinflusst wird, dass sich die Knotenposition der geführten Mode leicht verändert.

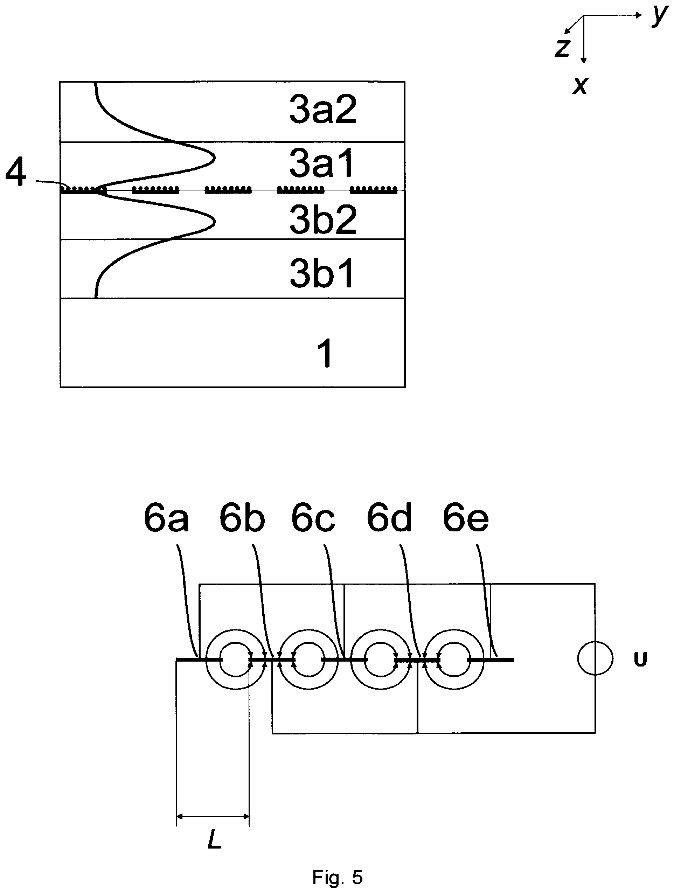

In Figur 4 sind die Elektroden 6a, 6b so angeordnet, wie es schon zu den Figuren 2 und 3 beschrieben wurde. Es ergibt sich gemäß der Visualisierung unten in der Figur 4 ein transversales elektrisches Feld, welches die Schicht 3b2 senkrecht zur Ausbreitungsrichtung der Mode durchsetzt und den Brechungsindex der Schicht 3b2 hierdurch ändert. Nachteil dieses Aufbaus ist die Tatsache, dass der Betrag der elektrischen Feldstärke E mit zunehmendem Elektrodenabstand d abnimmt (*E~d*⁻¹). Gerade die untere Elektrode 6b, die sich nicht im Knoten befindet macht aber einen hohen Elektrodenabstand d erforderlich, um die Propagationsverluste der Mode gering zu halten. In diesem Aufbau muss also zwischen Propagationsverlust und möglichst niedriger Schaltspannung ein Kompromiss gefunden werden. Einen Ausweg aus dieser Problematik zeigt der Aufbau in Figur 5.

In Figur 5 ist eine Anordnung gewählt, bei der alle Elektroden des durch diese zumindest zum Teil gebildeten Mittels in der Knotenposition oder zumindest in einem Bereich um die Knotenposition angeordnet sind. In dieser Ausführung umfasst das Mittel die nebeneinander liegenden Elektroden 6a bis 6e usw.. Dabei liegen in diesem Beispiel jede Elektrode und die übernächste Elektrode auf dem gleichen Potential (also 6a, 6c, 6e... auf einem Potential, 6b, 6d... auf dem zweiten verschiedenen Potential). Zwischen zwei benachbarten Elektroden wird somit ein elektrisches Feld angelegt, das hier im unteren Bereich wiederum die Schicht 3b2 durchsetzt und deren Brechungsindex ändert. Die lokal wirkende Feldstärke bei vorgegebener angelegter Spannung ist hier nicht mehr allein von der Dicke der dielektrischen Schichten sondern hauptsächlich vom Elektrodenabstand L abhängig. Für *L*<<*d* kann insofern eine besonders niedrige Schaltspannung erreicht werden. Da alle Elektroden und die Struktur im Knoten sind, können hierbei niedrige Propagationsverluste erreicht werden.

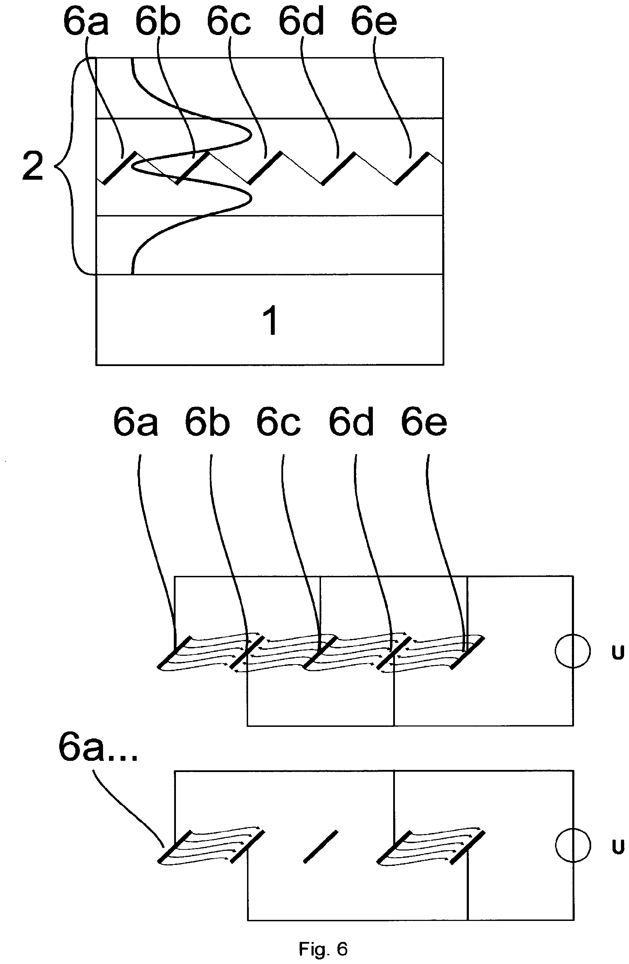

In Figur 6 wird die lichtauskoppelnde Struktur durch ein geblaztes Gitter ausgebildet, dass sich in einem Bereich um die Knotenposition befindet, bevorzugt gemäß der im allgemeinen Teil genannten Bedingung. Die Gitterstruktur ist hier nur aus Gründen der besseren Erkennbarkeit übertrieben groß dargestellt und kann sich tatsächlich innerhalb der eingangs definierten Intensitätsumgebung befinden.

Hier ist die Ausführung so gewählt, dass die Gitterstruktur Elektrodenflächen umfasst, die zur Ausbreitungsrichtung gekippt angeordnet sind, also dazu weder senkrecht noch parallel stehen. In einer Ausführung (oberes Schaltbild) kann dabei wie schon in Figur 5 beschrieben jede zweite Elektrode auf dem gleichen Potential liegen, zwischen denen entsprechend ein elektrisches Feld erzeugt werden kann. Dieses Feld ist dann im Wesentlichen in Ausbreitungsrichtung der Welle ausgerichtet, wobei sich die mittlere (überwiegende) Feldrichtung von einem Bereich zwischen den Elektroden zum nächsten umkehrt. Gemäß dem unteren Schaltbild kann auch ein Feld erzeugt werden, dessen überwiegende Feldkomponente ohne Richtungsumkehr in Propagationsrichtung liegt. Auch hier wird in der Schicht 3b2 auf diese Weise der Brechungsindex geändert und die Knotenposition verschoben.

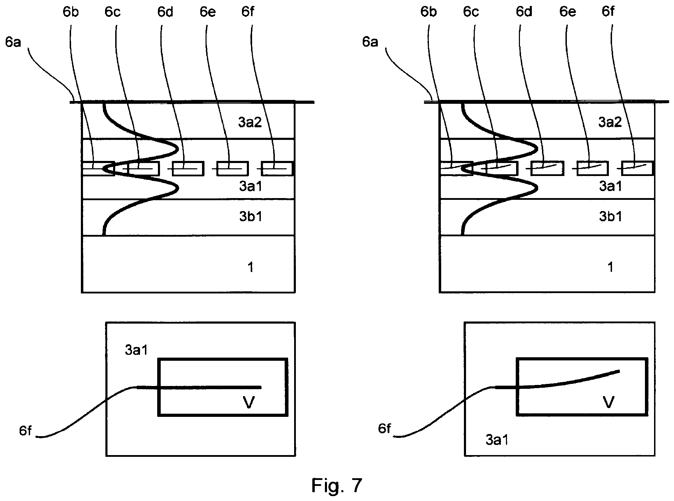

Figur 7 zeigt eine nicht erfindungsgemäße Ausführung, bei der die Struktur im Wellenleiter mechanisch verstimmt wird, insbesondere im Sinne einer örtlichen Verlagerung. Die Struktur wird hier durch z.B. metallische Membranen gebildet, die gleichzeitig Elektroden bilden. Die Membranen befinden sich in einem leeren bzw. luftgefülltem Volumen (V) innerhalb des hochbrechenden Dielektrikums 3a1. Eine Schicht, deren optische Dicke durch das elektrische Feld veränderbar ist, ist in dieser Ausführung nicht erforderlich. Ohne angelegtes Feld ist eine jeweilige Membranelektrode 6b, 6c, ... plan und weist eine Ebene auf, die parallel zu den Schichtebenen liegt. Die Membranelektroden liegen somit flach und passen in den Knoten der Mode. Durch Anlegen einer Spannung zwischen einer Membranelektrode und der gemeinsamen Masseelektrode 6a wird die entsprechende Membranelektrode aus dem Knoten verschoben und wechselwirkt somit stärker mit der geführten Welle. Ein Subpixel kann dabei aus je einer einzelnen Membranelektrode oder bevorzugt durch eine Gruppe von mehreren, insbesondere wenigstens zwei, bevorzugt benachbarten Membranelektroden in Verbindung mit der gemeinsamen Elektrode 6a definiert werden. Letztere Ausführung kann letztlich auch künstliche Gitter mit einstellbaren Gitterperioden erzeugen und so die Farb- und oder Richtungsabhängigkeit der lokalen Auskopplung durchstimmen. Hierfür können z.B. für unterschiedliche Gitterperioden unterschiedliche Anzahlen von bevorzugt benachbarten Membranelektroden zu einer jeweiligen Gruppe zusammengefasst werden. Innerhalb einer Gruppe werden die Membranelektroden beispielsweise alle gleich angesteuert.

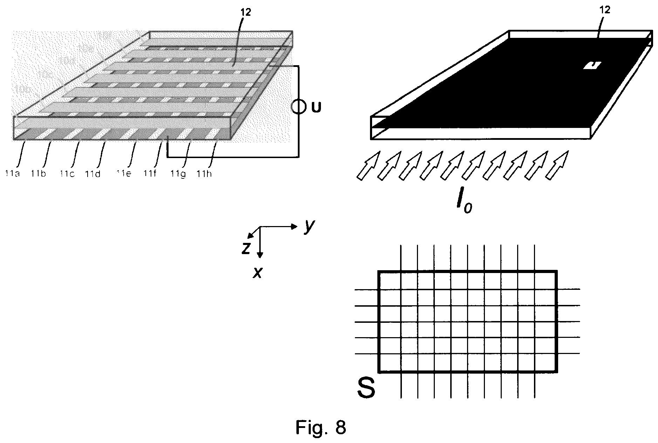

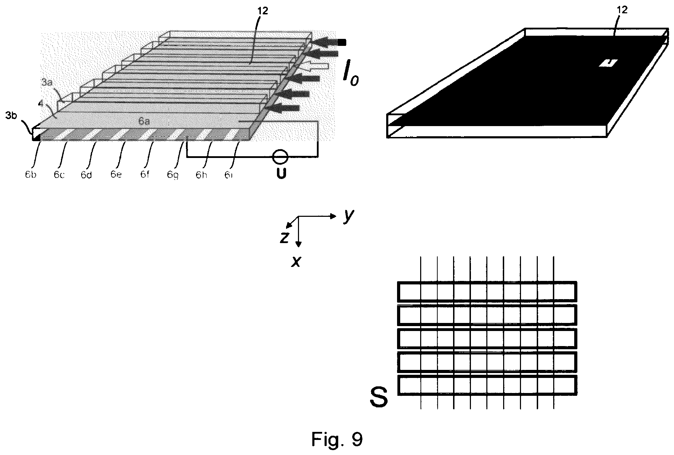

Die Figuren 8 und 9 zeigen Ausführungen, bei denen mit mehreren Mitteln zur lokalen Knotenverschiebung ein monochromes Display ausgebildet ist.

Der Wellenleiter in Figur 8 hat einen grundsätzlichen Aufbau gemäß Figur 2, wobei jedoch in der Ebene der hier nicht visualisierten Struktur eine erste Gruppe von Elektroden 10a, 10b,...angeordnet ist, von denen jede Elektrode 10 in y-Richtung längserstreckt ist. Die Elektroden sind alle zueinander parallel und beabstandet. Zwischen dem Substrat (im Bild nicht gezeigt) und der untersten dielektrischen Sicht des Wellenleiters ist somit in Stapelungsrichtung zur ersten Gruppe beabstandet eine zweite Gruppe von Elektroden 11a, 11b,.... angeordnet. Auch diese Elektroden sind zueinander parallel und beabstandet, jedoch in z-Richtung längserstreckt und damit senkrecht zur ersten Gruppe.

Jede einzelne Elektrode der Gruppen lässt sich mit einem elektrischen Potential beaufschlagen, wobei die Elektroden verschiedener Gruppen mit unterschiedlichem Potential beaufschlagt werden, um zwischen den Elektroden der beiden Gruppen eine Potentialdifferenz und somit ein elektrisches Feld zu bilden.

Das elektrische Feld ergibt sich im Überlappungsbereich 12, wo sich zwei mit verschiedenem Potential angesteuerte Elektroden 10,11 bei Betrachtung in Stapelungsrichtung x kreuzen. So wird durch den Kreuzungsbereich dasjenige Pixel definiert, an welchem die Lichtauskopplung erfolgen soll, da nur dort die Knotenposition der propagierenden Mode verschoben wird. Bei einem Farbdisplay würde man für die einzelnen Subpixel in ähnlicher Weise verfahren.

Es kann somit die erste Gruppe die möglichen Zeilen- und die zweite Gruppe die möglichen Spaltenpositionen des Displays definieren.

Sofern der Wellenleiter mit einer einzigen Lichtquelle versorgt ist ergibt sich ein monochromes Display. Das Licht dieser Lichtquelle (Im Bild mit *I₀* bezeichnet) wird dann erfindungsgemäß möglichst gleichmäßig die gesamte Fläche des Displays ausleuchten. Durch zeitlich nacheinander angesteuerte verschiedene Lichtquellen kann dasselbe Subpixel im Zeitmultiplex auch mehrfarbig betrieben werden. Das Schema (im Bild mit S bezeichnet) unten rechts soll verdeutlichen, dass das gesamte Display aus einem einzigen Wellenleiter (fettes Rechteck) besteht und sowohl die Zeilen- als auch die Spaltenauswahl durch elektrische Adressierung einzelner Elektroden erfolgt (schmale Linien).

Figur 9 zeigt eine Ausführung die ebenso grundsätzlich dem Aufbau der Figur 2 entspricht. Allerdings ist hier der Wellenleiter derart aufgebaut, dass der obere Schichtaufbau 3a nicht über die Fläche des Wellenleiters durchgängig ist, sondern durch nebeneinander liegende parallele beabstandete Streifen gebildet wird. Jeder Streifen bildet hier eine Zeile des Displays. In einer anderen Ausführung könnte zwischen den Streifen auch der Schichtaufbau 3b entfernt sein.

In dem gezeigten Beispiel ist der untere Schichtaufbau 3b über die gesamte Fläche ausgebildet und trägt eine vollflächige lichtauskoppelnde Schicht 4, die vollflächige Elektrode 6a, die somit in der Knotenposition oder zumindest in dessen Umgebung positioniert ist und alle Streifen der oberen Schichtaufbauten 3a. Die Streifen des oberen Schichtaufbaus 3a sind alle parallel und in einer ersten, der Zeilenrichtung entsprechenden Richtung y längserstreckt.

Unter dem unteren Schichtaufbau 3b sind streifenförmige Elektroden angeordnet 6b, 6c, 6d,..., die parallel beabstandet sind und in einer Richtung z längserstreckt sind, hier senkrecht zur Richtung y.

Jeder Streifen des oberen Schichtaufbaus 3a weist wenigstens eine separate Lichtquelle auf (Im Bild mit *I₀* bezeichnet), so dass durch diese immer ein gesamter Streifen mit Licht geflutet wird und sich in dem durch den Streifen und den unteren Schichtaufbau 3b gebildeten Wellenleiter das Licht ausbreitet, aber durch den Streifen lateral beschränkt ist. Durch Ansteuerung der jeweiligen Lichtquelle wird somit die Zeilenposition im Display definiert.

Durch Ansteuerung der gewünschten Elektrode (6b, 6c, 6d,...) wird dazu die gewünschte Spaltenposition definiert. Licht wird somit nur aus dem illuminierten Streifen des Schichtaufbaus 3a ausgekoppelt unter welchem, durch die Elektrode 3b ein elektrisches Feld erzeugt ist. Ein Pixel bzw. Subpixel ist hier durch die in Stapelrichtung betrachtete Überlappungszone vom Streifen des Schichtaufbaus 3a und der Elektrode 6b definiert. Das Schema unten rechts (im Bild mit S bezeichnet) soll verdeutlichen, dass das gesamte Display aus verschiedenen Wellenleitern (fette Rechtecke) besteht, welche die Zeilenauswahl ermöglichen, während lediglich die Spaltenauswahl durch elektrische Adressierung einzelner Elektroden erfolgt (schmale Linien). Dieses Schema wird in Bild 10 wieder aufgegriffen.

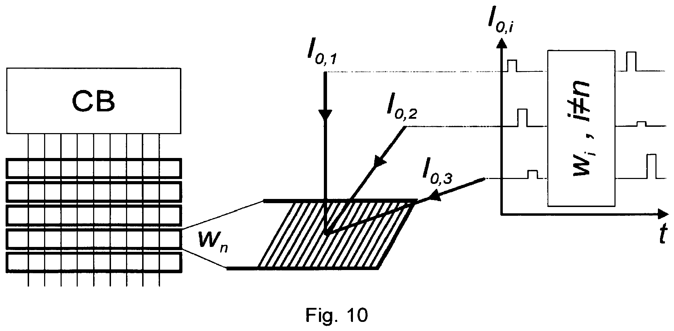

Figur 10 zeigt schematisch die Realisierung eines Farbdisplays. Wie in Figur 9 dargestellt besteht es aus streifenförmigen Wellenleitern, die die Zeilendefinition erlauben. Die Einkopplung von Licht am Ende eines streifenförmigen Wellenleiters ist beispielhaft für den n-ten Wellenleiter (im Bild mit *wₙ* bezeichnet) vergrößert dargestellt und erfolgt in entsprechender Weise für jeden streifenförmigen Wellenleiter. Zunächst muss die Anregung sicherstellen, dass ein möglichst hoher Anteil der einstrahlenden Lichtintensität in die korrekte für die Funktion des Displays notwendige Mode eingekoppelt wird.

Ein Beispiel für eine mögliche Realisierung ist ein Gitterkoppler. Dieser koppelt unter einer bestimmten Richtung einfallendes Licht einer bestimmten Wellenlänge an eine Wellenleitermode eines bestimmten effektiven Brechungsindex. Durch Einstellung eines genauen Winkels kann dabei also beispielsweise sichergestellt werden, dass nahezu alles Licht in die TE₁-Mode und nicht in die entsprechende Grundmode eingekoppelt wird, da das Licht der Grundmode sofort stark von der Struktur ausgekoppelt würde und entsprechend für die Anwendung verloren wäre. Dieses funktioniert umso besser, je größer der Unterschied des effektiven Index der beteiligten Moden ist (Wellenleiterdesign) und je kleiner die spektrale Breite (Unterschied in der Wellenlänge des Lichtspektrums) und Strahldivergenz der Lichtquelle (Unterschied im Einfallswinkel auf den Gitterkoppler) ist. Letztere Forderungen können insbesondere mit Lasern sehr gut erfüllt werden.

Im Beispiel, aber auch mit allgemeiner Gültigkeit kann zur Lichteinkopplung in einen Wellenleiter ein Blaze-Gitter verwendet werden, das am Ende eines jeweiligen Wellenleiters, hier der streifenförmigen Wellenleiter in diese eingeprägt wurde. Das Gitter wird durch die parallelen Striche senkrecht zur Streifenlänge schematisch dargestellt. Es werden mehrere, hier drei in die gewünschte Richtung polarisierte Laserstrahlen verwendet (im Bild mit *I₀₁, I₀₂, I₀₃* bezeichnet), beispielsweise ein roter, ein grüner, ein blauer, die durch die beschichteten Blaze-Gitter sehr effizient (typisch deutlich über 50%) in die gewünschte Mode einkoppeln. Zu diesem Zweck treffen sie in der Regel unter jeweils verschiedenen Winkeln auf das Gitter.

Das rechte Diagramm zeigt die jeweilige Helligkeit der Laser (*I*_{*0*,*i*}), die auf das Gitter einstrahlt, als Funktion der Zeit (mit t bezeichnet). Entscheidend ist in dieser Ausführung, dass zu jedem Zeitpunkt nur ein Laserstrahl den Wellenleiter trifft. Dieser ist also stets einfarbig beleuchtet. Außerdem (in Figur 10 nicht gezeigt) ist stets nur eine Zeile beleuchtet. Dieses ist durch den Kasten mit der Beschriftung (*wᵢ,* i≠n) symbolisiert, der also den Zeitabschnitt markiert, in dem alle übrigen Wellenleiter bzw. Zeilen des Displays beleuchtet werden. Zusammenfassend ist also stets nur eine Zeile (also ein streifenförmiger Wellenleiter) in jeweils nur einer Farbe beleuchtet. Die jeweilige Helligkeit dieser Beleuchtung kann dabei verändert werden.

Die Spaltenauswahl (senkrechte Striche und Kasten mit der Bezeichnung CB) erfolgt durch elektrische Adressierung der entsprechenden Mittel (wie zu Fig. 9 beispielhaft gezeigt und beschrieben). Die Helligkeitswerte aller Subpixel der gerade eingeschalteten Farbe des gerade eingeschalteten Wellenleiters können dabei alle gleichzeitig adressiert werden, da sie nicht auf die anderen Wellenleiter wirken, welche ja dunkel sind. Damit ergibt sich eine neue und vor allem extrem schnelle Art der Display-Adressierung. Sowohl für die elektrische Spaltenauswahl als auch für die Beleuchtung der Zeilen können im Allgemeinen analoge Pegel verwendet werden. Das rechte Diagramm in Figur 10 zeigt, dass die Helligkeitspegel variieren. Dieses entspricht der oben beschriebenen "Nachsteuerung der Intensität der Lichtquelle". Diese ist notwendig, um bei einer größeren Anzahl oder Helligkeit leuchtender Subpixel für jeden Subpixel die gewünschte Helligkeit zu erreichen. Darüber hinaus kann die Verwendung analoger Pegel für die Spaltenauswahl genutzt werden, um etwaige nicht vernachlässigbare Propagationsverluste innerhalb der Wellenleiter zu kompensieren. Hierbei würden die Mittel der weiter von der Lichtquelle entfernten Spalten entsprechend stärker angesteuert.

Aufgrund der extrem hohen zu erwartenden Schaltgeschwindigkeiten und der hohen lokalen Intensitäten, die durch Laserbestrahlung erreichbar sind, ist es sogar denkbar, die Subpixel der gerade eingeschalteten Farbe des gerade eingeschalteten Wellenleiters ebenfalls zeitlich nacheinander einzuschalten. In diesem Fall wäre zu jedem Zeitpunkt nur ein Subpixel mit einer Farbe eingeschaltet. Man bräuchte entsprechend keine "Nachsteuerung der Intensität der Lichtquelle", sondern müsste lediglich mögliche Propagationverluste kompensieren. Dieses könnte entsprechend der Wahl der Pegel der Lichtquelle (in Abhängigkeit der gerade eingeschalteten Pixelposition) gewährleistet werden, so dass man seitens der Spaltenauswahl wieder auf konstante Pegel zurückgreifen könnte.

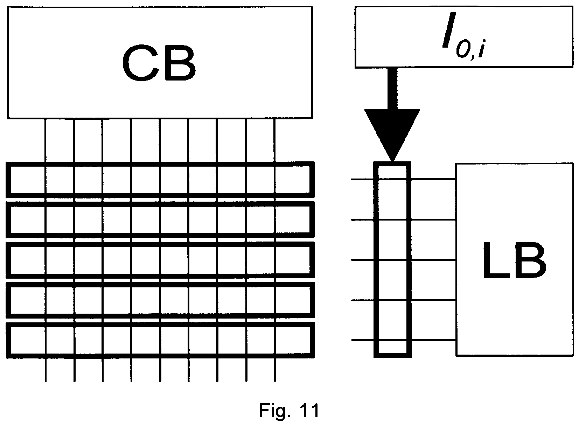

Vorteil einer Verwendung von Lasern als Lichtquellen, ist der besonders große erreichbare Farbraum. Nachteile könnten in den Herstellungskosten liegen. Das Display nach Figur 10 könnte im einfachsten Fall drei Laser je Displayzeile verwenden. Da aber zu jeder Zeit ohnehin jeweils nur eine Zeile beleuchtet ist, erscheint es absolut sinnvoll, das Konzept zur Spaltenauswahl auf die Zeilenauswahl zu übertragen. Dieses ist schematisch in Figur 11 gezeigt.

Figur 11 zeigt ein Schema, ähnlich zu Bild 10. Hierbei wird Licht der Lichtquellen (*I_{0,i}*) in einen gemeinsamen Lichtquellenwellenleiter (fettes von oben nach unten verlaufendes Rechteck) oder in einen Lichtquellenwellenleiter je Lichtquelle eingekoppelt. Die Zeilenauswahl geschieht nun ebenfalls mit der erfindungsgemäßen Methode (im Bild durch die waagerechten Striche und den mit LB bezeichneten Kasten dargestellt). An jeweils genau einer Zeilenposition wird Licht aus dem Lichtquellenwellenleiter in den dieser Zeilenposition entsprechenden Wellenleiter des Displays (mehrere fette von links nach rechts verlaufende Rechtecke) eingekoppelt. Von diesem Wellenleiter erfolgt die Auskopplung an der ausgewählten Spalte in der bereits beschriebenen Weise. Die Spaltenauswahl ist im Bild durch die senkrechten Striche und den mit CB bezeichneten Kasten dargestellt). Vorteil dieser Anordnung ist die Reduzierung der insgesamt notwendigen Lichtquellen. Im einfachsten Fall sind drei entsprechend leistungsstarke Lichtquellen, bevorzugt Laser für das gesamte Farbdisplay ausreichend.

Für das diesem Antrag zugrunde liegende Projekt wurden im Rahmen der Finanzhilfevereinbarung Nr. 637367 Fördermittel aus dem Programm der Europäischen Union für Forschung und Innovation *"Horizont* 2020" bereitgestellt.

## Patentansprüche

1. Wellenleiter umfassend ein Substrat (1), auf dem ein Schichtstapel (2) von wenigstens zwei Schichtaufbauten (3a, 3b) angeordnet ist, wobei jeder Schichtaufbau (3a, 3b) wenigstens eine transparente dielektrische Schicht (3a1, 3b2) mit höherem Brechungsindex als das Substrat (1) aufweist und wobei zwischen zwei benachbarten Schichtaufbauten (3a, 3b) eine lichtauskoppelnde Struktur (4) angeordnet ist, wobei im Wellenleiter eine Wellenleitermode führbar ist mit wenigstens einem Knoten (5a), dessen Knotenposition der Position der lichtauskoppelnden Struktur (4) im Schichtstapel entspricht **dadurch gekennzeichnet, dass** der Wellenleiter wenigstens ein Mittel umfasst zur zeitweisen Verschiebung der Lage des Knotens (5a) einer geführten Wellenleitermode gegenüber der Lage der lichtauskoppelnden Struktur, wofür mit dem wenigstens einen Mittel die optische Dicke wenigstens einer transparenten dielektrischen Schicht des Schichtstapels zeitweise änderbar ist, wobei das wenigstens eine Mittel wenigstens zwei im oder am Schichtstapel (2) angeordnete ansteuerbare Elektroden (6a, 6b) umfasst, mit denen im Schichtstapel (2) ein elektrisches Feld zeitweise erzeugbar ist und wenigstens eine transparente dielektrische Schicht (3b2) des Schichtstapels (2) von dem erzeugbaren elektrischen Feld durchsetzt ist und die wenigstens eine von dem elektrischen Feld durchsetzte transparente dielektrische Schicht einen mit dem erzeugbaren elektrischen Feld änderbaren Brechungsindex aufweist oder die wenigstens eine von dem elektrischen Feld durchsetzte transparente dielektrische Schicht eine mit dem erzeugbaren elektrischen Feld änderbare geometrische Dicke aufweist.

2. Wellenleiter nach Anspruch 1, **dadurch gekennzeichnet, dass** die lichtauskoppelnde Struktur (4) zum Zweck der Auskopplung von Licht aus dem Wellenleiter als streuende Struktur oder beugende Struktur oder reflektierende oder lumineszierende Struktur ausgebildet ist.

3. Wellenleiter nach einem der vorherigen Ansprüche 1 oder 2, **dadurch gekennzeichnet, dass** er in der Stapelungsrichtung betrachtet um die lichtauskoppelnde Struktur (4) herum hinsichtlich der geometrischen Dicken und der Brechungsindizes von Substrat (2) und den Schichten symmetrisch ausgebildet ist, insbesondere so dass der Knoten (5a) für alle Wellenlängen mittig zwischen den die lichtauskoppelnde Struktur (4) umgebenden Schichten (3a1, 3b2) liegt

4. Wellenleiter nach einem der vorherigen Ansprüche, **dadurch gekennzeichnet, dass** wenigstens eine der Elektroden (6a, 6b) eines Mittels an der der Position der lichtauskoppelnden Struktur entsprechenden Knotenposition oder zumindest im Bereich einer der Position der lichtauskoppelnden Struktur entsprechenden Knotenposition einer im Wellenleiter führbaren Wellenleitermode angeordnet ist.

5. Wellenleiter nach Anspruch 4, **dadurch gekennzeichnet, dass** alle Elektroden eines Mittels in einer der Position der lichtauskoppelnden Struktur entsprechenden Knotenposition oder zumindest im Bereich einer der Position der lichtauskoppelnden Struktur entsprechenden Knotenposition einer im Wellenleiter führbaren Wellenleitermode in einer der möglichen Propagationsrichtungen einer Wellenleitermode beabstandet sind, insbesondere Flächenbereiche benachbarter Elektroden interdigital ineinandergreifend ausgebildet sind.

6. Wellenleiter nach Anspruch 4 oder 5, **dadurch gekennzeichnet, dass** die an der der Position der lichtauskoppelnden Struktur entsprechenden Knotenposition ausgebildete Elektrode durch die lichtauskoppelnde Struktur selbst ausgebildet ist.

7. Wellenleiter nach Anspruch 4 oder 5, **dadurch gekennzeichnet, dass** die im Bereich der der Position der lichtauskoppelnden Struktur entsprechenden Knotenposition ausgebildete Elektrode (6a) angrenzend an die lichtauskoppelnde Struktur (4) angeordnet ist.

8. Wellenleiter nach einem der vorherigen Ansprüche 4 bis 7, **dadurch gekennzeichnet, dass** eine Elektrode zu einer anderen Elektrode, die an der der Position der lichtauskoppelnden Struktur entsprechenden Knotenposition oder zumindest im Bereich der der Position der lichtauskoppelnden Struktur entsprechenden Knotenposition angeordnet ist, in Stapelungsrichtung beabstandet ist, insbesondere diese Elektrode
i. angrenzend an den gesamten Schichtstapel (2), bevorzugt zwischen dem Substrat (1) und dem Schichtstapel (2) oder
ii. in einer anderen Knotenposition derselben führbaren Wellenleitermode
angeordnet ist.

9. Wellenleiter nach einem der vorherigen Ansprüche, **dadurch gekennzeichnet, dass** mehrere Mittel in den parallel zu den Schichten liegenden Ausbreitungsrichtungen mehrfach nebeneinanderliegend angeordnet sind, insbesondere die mehreren Mittel eine n x m - Matrix ausbilden, mit n>=1 und m>1.

10. Wellenleiter nach Anspruch 9, **dadurch gekennzeichnet, dass** ein Subpixel eines durch die Matrix gebildeten Displays durch die geometrische Umgrenzung eines jeden Mittels betrachtet in der Stapelungsrichtung definiert ist.

11. Wellenleiter nach Anspruch 9, **dadurch gekennzeichnet, dass**
a. er eine erste Gruppe von mehreren parallel nebeneinander liegenden Elektroden umfasst, die jeweils in einer ersten möglichen, parallel zu den Schichten liegenden Ausbreitungsrichtung längserstreckt sind und
b. er eine zweite Gruppe von mehreren parallel nebeneinander liegenden Elektroden umfasst, die jeweils in einer zweiten möglichen, parallel zu den Schichten liegenden Ausbreitungsrichtung längserstreckt sind, insbesondere wobei die beiden Ausbreitungsrichtungen senkrecht zueinander liegen, und
c. die erste und die zweite Gruppe in Stapelungsrichtung beabstandet sind und
d. ein jeweiliges Mittel gebildet wird durch die in Stapelungsrichtung überlappend angeordneten Flächenbereiche von Elektroden der ersten und zweiten Gruppe.

12. Wellenleiter nach einem der vorherigen Ansprüche, **dadurch gekennzeichnet, dass** die lichtauskoppelnde Struktur (4) ausgebildet ist als:
a. strukturierte Metallschicht, bevorzugt nach der Abscheidung geätztem Metall, insbesondere Silber, oder
b. mit Metall beschichtete angeraute Oberfläche einer Schicht eines Schichtaufbaus, oder
c. Gitter, insbesondere als Blaze-Gitter, oder
d. Schichten aus metallischen oder dielektrischen Nanopartikeln oder Nanostäbchen, oder
e. Fehlstellen innerhalb einer Schicht, insbesondere Polymerschicht, oder
f. Phasenübergänge in Blockcopolymeren, oder
g. lumineszierende Schichten, oder
h. metallische elektrostatisch bewegliche Membranen.

13. Display mit einer Zeilen- und Spaltenanordnung von ansteuerbaren Subpixeln, umfassend wenigstens einen Wellenleiter nach Anspruch 10, wobei die Subpixel durch die Mittel zur zeitweisen Verschiebung der Lage des Knoten gegenüber der Lage der lichtauskoppelnden Struktur zueinander definiert sind.

14. Verfahren zur Auskopplung von Licht aus einem Wellenleiter nach einem der vorherigen Ansprüche, wobei das Licht als Wellenleitermode mit wenigstens einem Knoten propagiert, dessen Knotenposition mit der Position der lichtauskoppelnden Struktur im Wellenleiter korrespondiert **dadurch gekennzeichnet, dass** die relative Lage zueinander von dem Knoten der Wellenleitermode und der lichtauskoppelnden Struktur zeitweise verschoben wird durch Verschiebung des Knotens gegenüber der lichtauskoppelnden Struktur.

## Claims

1. Waveguide comprising a substrate (1), on which a layer stack (2) of at least two layer formations (3a, 3b) is arranged, wherein each layer formation (3a, 3b) comprises at least one transparent dielectric layer (3a1, 3b2) having a higher refractive index than the substrate (1), and wherein a light output coupling structure (4) is arranged between two adjacent layer formations (3a, 3b), wherein in the waveguide a waveguide mode is guidable with at least one node (5a), the node position of which corresponds to the position of the light output coupling structure (4) in the layer stack, **characterized in that** the waveguide comprises at least one means for intermittently shifting the position of the node (5a) of a guided waveguide mode relative to the position of the light output coupling structure, for which purpose the optical thickness of at least one transparent dielectric layer of the layer stack is intermittently changeable by way of the at least one means, wherein the at least one means comprises at least two controllable electrodes (6a, 6b) which are arranged in or on the layer stack (2) and by way of which an electric field is intermittently generable in the layer stack (2), and at least one transparent dielectric layer (3b2) of the layer stack (2) is permeated by the generable electric field and the at least one transparent dielectric layer permeated by the electric field has a refractive index that is changeable by way of the generable electric field or the at least one transparent dielectric layer permeated by the electric field has a geometric thickness that is changeable by way of the generable electric field.

2. Waveguide according to Claim 1, **characterized in that** the light output coupling structure (4) for the purpose of coupling light out of the waveguide is embodied as a scattering structure or a diffractive structure or a reflective or luminescent structure.

3. Waveguide according to either of the preceding Claims 1 and 2, **characterized in that** said waveguide, as viewed in the stacking direction, is embodied symmetrically around the light output coupling structure (4) with regard to the geometric thicknesses and the refractive indices of the substrate (2) and the layers, in particular such that the node (5a) for all wavelengths lies centrally between the layers (3a1, 3b2) surrounding the light output coupling structure (4).

4. Waveguide according to any of the preceding claims, **characterized in that** at least one of the electrodes (6a, 6b) of a means is arranged, with respect to a waveguide mode that is guidable in the waveguide, at the node position of said waveguide mode which corresponds to the position of the light output coupling structure or at least in the region of a node position of said waveguide mode which corresponds to the position of the light output coupling structure.

5. Waveguide according to Claim 4, **characterized in that** all the electrodes of a means disposed, with respect to a waveguide mode that is guidable in the waveguide, in a node position of said waveguide mode which corresponds to the position of the light output coupling structure or at least in the region of a node position of said waveguide mode which corresponds to the position of the light output coupling structure are spaced apart in one of the possible propagation directions of a waveguide mode, and in particular surface regions of adjacent electrodes are embodied in an interdigitally intermeshing fashion.

6. Waveguide according to Claim 4 or 5, **characterized in that** the electrode embodied at the node position which corresponds to the position of the light output coupling structure is embodied by the light output coupling structure itself.

7. Waveguide according to Claim 4 or 5, **characterized in that** the electrode (6a) embodied in the region of the node position which corresponds to the position of the light output coupling structure is arranged in a manner adjoining the light output coupling structure (4).

8. Waveguide according to any of the preceding Claims 4 to 7, **characterized in that** one electrode is spaced apart in the stacking direction from another electrode that is arranged at the node position which corresponds to the position of the light output coupling structure or at least in the region of the node position which corresponds to the position of the light output coupling structure, and in particular this electrode is arranged
i. in a manner adjoining the entire layer stack (2), preferably between the substrate (1) and the layer stack (2), or
ii. in another node position of the same guidable waveguide mode.

9. Waveguide according to any of the preceding claims, **characterized in that** a plurality of means are arranged multiply next to one another in the propagation directions that are parallel to the layers, and in particular the plurality of means form an n × m matrix, where n ≥ 1 and m > 1.

10. Waveguide according to Claim 9, **characterized in that** a subpixel of a display formed by the matrix is defined by the geometric boundary of each means as viewed in the stacking direction.

11. Waveguide according to Claim 9, **characterized in that**
a. said waveguide comprises a first group of a plurality of electrodes lying parallel next to one another, which are each longitudinally extended in a first possible propagation direction that is parallel to the layers, and
b. said waveguide comprises a second group of a plurality of electrodes lying parallel next to one another, which are each longitudinally extended in a second possible propagation direction that is parallel to the layers, in particular wherein the two propagation directions are perpendicular to one another, and
c. the first and second groups are spaced apart in the stacking direction, and
d. a respective means is formed by the surface regions of electrodes of the first and second groups that are arranged so as to overlap in the stacking direction.

12. Waveguide according to any of the preceding claims, **characterized in that** the light output coupling structure (4) is embodied as:
a. a structured metal layer, preferably metal etched after deposition, in particular silver, or
b. a metal-coated roughened surface of a layer of a layer formation, or
c. a grating, in particular as a blazed grating, or
d. layers of metallic or dielectric nanoparticles or nanorods, or
e. defects within a layer, in particular a polymer layer, or
f. phase transitions in block copolymers, or
g. luminescent layers, or
h. metallic electrostatically movable membranes.

13. Display with a row and column arrangement of controllable subpixels, comprising at least one waveguide according to Claim 10, wherein the subpixels are defined by the means for intermittently shifting the position of the node relative to the position of the light output coupling structure.

14. Method for coupling light out of a waveguide according to any of the preceding claims, wherein the light propagates as a waveguide mode with at least one node, the node position of which corresponds to the position of the light output coupling structure in the waveguide, **characterized in that** the relative position of the node of the waveguide mode and the light output coupling structure with respect to one another is intermittently shifted by shifting the node relative to the light output coupling structure.

## Revendications

1. Guide d'onde comprenant un substrat (1) sur lequel est disposé un empilement de couches (2) d'au moins deux structures de couches (3a, 3b), chaque structure de couches (3a, 3b) comportant au moins une couche diélectrique transparente (3a1, 3b2) dont l'indice de réfraction est supérieur à celui du substrat (1) et une structure de sortie de lumière par couplage (4) étant disposée entre deux structures de couches adjacentes (3a, 3b), un mode de guide d'ondes pouvant être guidé dans le guide d'ondes, ledit mode comprenant au moins un noeud (5a) dont la position correspond dans l'empilement de couches à la position de la structure de sortie de lumière par couplage (4),
**caractérisé en ce que** le guide d'ondes comprend au moins un moyen destiné à décaler temporairement la position du noeud (5a) d'un mode de guide d'ondes guidé par rapport à la position de la structure de sortie de lumière par couplage, ce pour quoi l'épaisseur optique d'au moins une couche diélectrique transparente de l'empilement de couches peut être modifiée temporairement avec l'au moins un moyen, l'au moins un moyen comprenant au moins deux électrodes commandables (6a, 6b) qui sont disposées dans ou sur l'empilement de couches (2) et qui permettent de générer temporairement un champ électrique dans l'empilement de couches (2), et au moins une couche diélectrique transparente (3b2) de l'empilement de couches (2) étant imprégnée par le champ électrique qui peut être généré et l'au moins une couche diélectrique transparente imprégnée par le champ électrique ayant un indice de réfraction qui peut être modifié avec le champ électrique qui peut être généré, ou l'au moins une couche diélectrique transparente qui est imprégnée par le champ électrique ayant une épaisseur géométrique qui peut être modifiée avec le champ électrique qui peut être généré.

2. Guide d'onde selon la revendication 1, **caractérisé en ce que** la structure de sortie de lumière par couplage (4) est conçue comme une structure diffusante ou une structure diffractive ou une structure réfléchissante ou luminescente afin de faire sortir la lumière du guide d'onde par couplage.

3. Guide d'onde selon l'une des revendications 1 ou 2 précédentes, **caractérisé en ce qu'**il est conçu symétriquement autour de la structure de sortie de lumière par couplage (4) en termes d'épaisseurs géométriques et d'indices de réfraction du substrat (2) et des couches, vu dans la direction d'empilement, en particulier de sorte que le noeud (5a) se situe pour toutes les longueurs d'onde au centre entre les couches (3a1, 3b2) entourant la structure de sortie de lumière par couplage (4).

4. Guide d'onde selon l'une des revendications précédentes, **caractérisé en ce qu'**au moins une des électrodes (6a, 6b) d'un moyen est disposée à la position du noeud correspondant à la position de la structure de sortie de lumière par couplage ou au moins au niveau d'une position de noeud correspondant à la position de la structure de sortie de lumière par couplage d'un mode de guide d'ondes qui peut être guidé dans le guide d'ondes.

5. Guide d'onde selon la revendication 4, **caractérisé en ce que** toutes les électrodes d'un moyen sont espacées dans l'une des directions de propagation possibles d'un mode de guide d'onde dans une position de noeud correspondant à la position de la structure de sortie de lumière par couplage ou au moins au niveau d'une position de noeud, correspondant à la position de la structure de sortie de lumière par couplage, d'un mode de guide d'onde qui peut être guidé dans le guide d'onde, en particulier des zones de surface d'électrodes adjacentes étant imbriquées les unes dans les autres.

6. Guide d'onde selon la revendication 4 ou 5, **caractérisé en ce que** l'électrode formée à la position du noeud correspondant à la position de la structure de sortie de lumière par couplage est formée par la structure de sortie de lumière par couplage elle-même.

7. Guide d'onde selon la revendication 4 ou 5, **caractérisé en ce que** l'électrode (6a) formée au niveau de la position du noeud correspondant à la position de la structure de sortie de lumière par couplage est disposée de manière adjacente à la structure de sortie de lumière par couplage (4).

8. Guide d'onde selon l'une des revendications précédentes 4 à 7, **caractérisé en ce qu'**une électrode est espacée dans la direction d'empilement d'une autre électrode qui est disposée à la position du noeud correspondant à la position de la structure de sortie de lumière par couplage ou au moins au niveau de la position du noeud correspondant à la position de la structure de sortie de lumière par couplage, en particulier cette électrode est disposée
i. de manière adjacente à tout l'empilement de couches (2), de préférence entre le substrat (1) et l'empilement de couches (2) ou
ii. à une autre position du noeud du même mode de guide d'ondes qui peut être guidé.

9. Guide d'onde selon l'une des revendications précédentes, **caractérisé en ce que** plusieurs moyens sont disposés les uns à côté des autres dans les directions de propagation parallèles aux couches, notamment les plusieurs moyens forment une matrice n x m, avec n >= 1 et m > 1.

10. Guide d'onde selon la revendication 9, **caractérisé en ce qu'**un sous-pixel d'un affichage formé par la matrice est défini par la frontière géométrique de chaque moyen, vu dans la direction d'empilement.

11. Guide d'onde selon la revendication 9, **caractérisé en ce que**
a. il comprend un premier groupe de plusieurs électrodes qui sont situées en parallèle les unes à côté des autres et qui s'étendent longitudinalement dans une première direction de propagation possible parallèle aux couches, et
b. il comprend un deuxième groupe de plusieurs électrodes qui sont situées en parallèle lesunes à côté des autres et s'étendent dans une deuxième direction de propagation possible parallèle aux couches, notamment les deux directions de propagation étant perpendiculaires l'une à l'autre, et
c. les premier et deuxième groupes sont espacés dans la direction d'empilement, et
d. un moyen respectif est formé par les zones de surface d'électrodes des premier et deuxième groupes qui sont disposées à chevauchement dans la direction d'empilement.

12. Guide d'onde selon l'une des revendications précédentes, **caractérisé en ce que** la structure de sortie de lumière par couplage (4) est conçue comme :
a. une couche métallique structurée de préférence un métal gravé après dépôt, notamment de l'argent, ou
b. une surface rugueuse revêtue de métal d'une couche d'une structure en couches, ou
c. un réseau, notamment un réseau blaze, ou
d. des couches de nanoparticules métalliques ou diélectriques ou de nano-bâtonnets, ou
e. des défauts à l'intérieur d'une couche, notamment d'une couche polymère, ou
f. des transitions de phase dans les copolymères séquences, ou
g. des couches luminescentes, ou
h. des membranes métalliques mobiles électrostatiquement.

13. Affichage à disposition en lignes et colonnes de sous-pixels commandables, ledit affichage comprenant au moins un guide d'onde selon la revendication 10, les sous-pixels étant définis les uns par rapport aux autres par les moyens destinés à décaler temporairement la position du noeud par rapport à la position de la structure de sortie de lumière par couplage.

14. Procédé de sortie de lumière par couplage d'un guide d'onde selon l'une des revendications précédentes, la lumière se propageant en mode de guide d'ondes comprenant au moins un noeud dont la position correspond dans le guide d'ondes à la position de la structure de sortie de lumière par couplage, **caractérisé en ce que** la position relative du noeud du mode de guide d'ondes et de la structure de sortie de lumière par couplage est décalée temporairement par décalage du noeud par rapport à la structure de sortie de lumière par couplage.
